# EUROPEAN PATENT SPECIFICATION

(11) **EP 1 650 638 B1**
(45) Date of publication and mention of the grant of the patent: **14.11.2012**
(21) Application number: 04747507.4
(22) Date of filing: 14.07.2004
(51) Int. Cl.: G06F 17/30, G06Q 10/00, H04L 12/58, G06F 3/048, H04M 1/247

(54) **INFORMATION OUTPUT DEVICE FOR OUTPUTTING A PLURALITY OF INFORMATION PRESENTING OUTLINE OF DATA**
INFORMATIONSAUSGABEVORRICHTUNG ZUM AUSGEBEN MEHRERER INFORMATIONSDARSTELLUNGSÜBERSICHTEN VON DATEN
DISPOSITIF DE SORTIE D'INFORMATION PERMETTANT DE SORTIR UNE PLURALITE D'INFORMATIONS PRESENTANT UNE SYNOPSIE DE DONNEES

(30) Priority: 17.07.2003 JP 2003198613
(43) Date of publication of application: 26.04.2006
(73) Proprietor: Sharp Kabushiki Kaisha, Osaka 545-8522 (JP)
(72) Inventor: SUDOH, Tatsuo, Chiba-shi Chiba 262-0025 (JP); NAOI, Kanae, Kyoto-shi Kyoto 601 8443 (JP)
(74) Representative: Brown, Kenneth Richard
(86) International application number: PCT/JP2004/010041
(87) International publication number: WO 2005/008463

(56) References cited:
- JP-A- 8 272 586
- JP-A- 9 265 370
- JP-A- 10 293 759
- JP-A- 11 065 915
- JP-A- 11 272 379
- JP-A- 2002 044 551
- JP-A- 2002 251 315
- US-A1- 2002 042 750
- US-B1- 6 269 403
- GILBERT J M ET AL: "Globally progressive interactive web delivery" INFOCOM '99. EIGHTEENTH ANNUAL JOINT CONFERENCE OF THE IEEE COMPUTER A ND COMMUNICATIONS SOCIETIES. PROCEEDINGS. IEEE NEW YORK, NY, USA 21-25 MARCH 1999, PISCATAWAY, NJ, USA,IEEE, US, vol. 3, 21 March 1999 (1999-03-21), pages 1291-1299, XP010323863 ISBN: 978-0-7803-5417-3
- "Multimedia client implementation on Personal Digital Assistants" LECTURE NOTES IN COMPUTER SCIENCE, SPRINGER, DE LNKD- DOI:10.1007/BFB0000333, vol. 1309, 10 September 1997 (1997-09-10), pages 283-295, XP007912184 ISSN: 0302-9743 [retrieved on 2006-04-10]
- NEUMANN L ET AL: "An approach for an adaptive visualization in a mobile environment" LECTURE NOTES IN COMPUTER SCIENCE, SPRINGER, DE LNKD- DOI:10.1007/BFB0000333, vol. 1309, 10 September 1997 (1997-09-10), pages 272-282, XP007912183 ISSN: 0302-9743 [retrieved on 2006-04-10]

## Description

### Technical Field

The present invention relates to an information output device, an information output method, and an information output program product, and more particularly to an information output device, an information output method, and an information output program product for outputting multiple pieces of information presenting the outline of data, with great convenience to users.

### Background Art

Recently, devices with communication functions such as mobile phones or PDA (Personal Digital Assistants) come into explosive proliferation, and the function and performance have steadily been advancing. Concerning the reception/transmission function of emails using mobile phones, the transmissible data size have increased and the supported data types have increased in variety. Therefore, it becomes possible to receive/transmit one or more multimedia data such as still images, moving images, audio, and animation attached to emails.

Then, in such devices, similarly to the processing in PC (personal computers), a plurality of images for presenting the outline with a reduced display size, such as multimedia data attached to emails, each slide of data subjected to a slide show, each scene of movie data configured with a plurality of scenes to change over time, are arranged to be displayed, so that the users can quickly recognize the content of each data, thereby improving the convenience.

A device employing a technique for displaying a reduced image of data is known, for example, in Patent Document 1, which discloses an email receiving device creating a thumbnail image of a file attached to a mail. The email receiving device disclosed in Patent Document 1 converts an image file attached to a mail into a thumbnail image allowing recognition of the outline, and also converts a file in a format other than an image into an image file, which is then converted into a thumbnail image and displayed together with the text of the received mail.

Patent Document 1: Javanese Patent Laying-Open No. 2001-75892

US 6,269,403 discloses a browser and publisher for multimedia object storage, retrieval and transfer. A browser and publisher capable of exchanging multimedia objects are provided in a new storage and delivery data format that increases performance and improves the user experience by reducing the transactions needed to retrieve a set of n objects from n to 1. The object data is interleaved with data definition entries identifying respective object data into a data format comprising a single stream for storage and/or delivery. The data format eliminates the need for multiple, asynchronous transactions thus reducing latency in the data transfer process.

### Disclosure of the Invention

### Problems To Be Solved by the Invention

However, when the method disclosed in Patent Document 1 is applied to recent devices such as mobile terminals, the following problems arise.

Specifically, while recent devices such as mobile terminals have improved in operation performance and increased in the capacity of installed memory areas, they have less resources as compared with PC, thereby ensuring less operation speed for creating thumbnail images.

In addition, the performance of display devices such as liquid crystal displays has enhanced to allow more text, larger images, and pictures to be displayed on a screen, so that images or pictures to be handled become larger. Disadvantageously, it takes much time to create thumbnail images of their reduced images.

Moreover, with the receivable/transmissible data size increased, a few to a few tens of files can be attached to one email. It is difficult to instantly create all the thumbnail images of a plurality of data. It takes about a few seconds from the operation by the user to display a list of thumbnail images of the attachment files to the creation and completed display of all the thumbnail images, which may make the users feel stress.

For a solution, the sender of a mail may transmit a thumbnail image together with an attachment file, so that the receiver may only retrieve and instantly display the thumbnail image without newly creating a thumbnail image. However, in a mail reception/transmission system of a mobile terminal, the receivable/transmissible data size has an upper limit, and the attachment of the thumbnail image data exceeds the upper limit, thereby disabling the transmission. Moreover, if the users are charged according to the receiving/transmitting data size, the attachment of thumbnails becomes burdensome to the users.

In addition, the processing of creating thumbnail images consumes more or less power, and in a device powered by a battery, the battery becomes exhausted rapidly due to the creation of thumbnail images.

The present invention is made to solve the aforementioned problems. It is an object of the present invention to provide an information output device, an information output method, and an information output program product, which can alleviate the slowness in switching to a thumbnail list display window and the stress applied to the users by such slowness, where an externally received document such as an email or a document created by the user includes one or more media data and a thumbnail image of each media data is displayed in a device.

### Means for Solving the Problems

In order to achieve the object as described above, in accordance with an aspect of the present invention, an information output device includes: a first information selection unit selecting information having been received and stored in the information output device; an outline presenting information creation unit creating outline presenting information corresponding to each of a plurality of multimedia data in parallel, said multimedia data being included in the information selected by said first information selection unit; and a presentation unit presenting said created outline presenting information, wherein said outline presenting information includes thumbnail images of the multimedia data; and said presentation unit presents alternative information to replace said outline presenting information or said outline presenting information under course of creation in said outline presenting information creation unit in stages according to respective said outline presenting information creation process before completion of said outline presenting information creation process.

In accordance with another aspect of the present invention, an information output method includes: a first information selection step of selecting information having been previously received and stored; an outline presenting information creation step of creating outline presenting information corresponding to each of a plurality of multimedia data in parallel, said multimedia data being included in the information selected at said first information selection step; and a presentation step of presenting said created outline presenting information, wherein said outline presenting information includes thumbnail images of the multimedia data; and at said presentation step, alternative information to replace said outline presenting information or said outline presenting information under course of creation processing at said outline presenting information creation step is presented in stages according to respective said outline presenting information creation process before completion of said outline presenting information creation process.

In accordance with a further aspect of the present invention, an information output program product causes a computer to execute a process of outputting information including multimedia data. The information output program product causes execution of: a first information selection step of selecting information having been previously received and stored; an outline presenting information creation step of creating outline presenting information corresponding to each of a plurality of multimedia data in parallel, said multimedia data being included in the information selected at said first information selection step; and a presentation step of presenting said created outline presenting information, wherein said outline presenting information includes thumbnail images of the multimedia data; and at said presentation step, alternative information to replace said outline presenting information or said outline presenting information under course of creation processing at said outline presenting information creation step is presented in stages according to respective said outline presenting information creation process before completion of said outline presenting information creation process,

a first information selection step of selecting information; an outline presenting information creation step of creating outline presenting information of multimedia data included in the information selected at the first information selection step; an outline presenting information creation control step of controlling execution of the outline presenting information creation process at the outline presenting information creation step; and a presentation step of presenting the created outline presenting information. At the presentation step, alternative information to replace the outline presenting information is presented before completion of the outline presenting information creation process.

### Brief Description of the Drawings

Fig. 1 is a block diagram showing a specific example of a hardware configuration of a mobile phone 100 in accordance with a first embodiment.
Fig. 2 is a block diagram showing a specific example of a function configuration of mobile phone 100 in accordance with the first embodiment.
Fig. 3 is a diagram showing a specific example of a data structure of mail data.
Fig. 4 is a diagram showing a specific example of a data structure of a media file.
Fig. 5 is a diagram showing a specific example of a data structure of thumbnail data.
Fig. 6 is a flowchart showing a process of opening a mail in mobile phone 100 in accordance with the first embodiment.
Fig. 7 is a flowchart showing a process of opening a mail in mobile phone 100 in accordance with the first embodiment.
Fig. 8 is a view showing a specific example of window transition.
Fig. 9 is a view showing a specific example of window transition.
Fig. 10 is a view showing a specific example of window transition.
Fig. 11 is a view showing a first specific example of a display window of intermediate data.
Fig. 12 is a view showing a second specific example of a display window of intermediate data.
Fig. 13 is a view showing a third specific example of a display window of intermediate data.
Fig. 14 is a view showing a fourth specific example of a display window of intermediate data.
Fig. 15 a view showing a fifth specific example of a display window of intermediate data.
Fig. 16 is a view showing a sixth specific example of a display window of intermediate data.
Fig. 17 is a view showing a specific example of a display window of alternative data.
Fig. 18 is a flowchart showing a process of deleting or moving thumbnail data in mobile phone 100 in accordance with the first embodiment.
Fig. 19 is a block diagram showing a specific example of a function configuration of mobile phone 100 in accordance with a second embodiment.
Fig. 20 is a flowchart showing a process of opening a mail in mobile phone 100 in accordance with the second embodiment.
Fig. 21 is a flowchart showing pre-read processing.
Fig. 22 is a flowchart showing pre-read processing.
Fig. 23 is a diagram showing a specific example of a data structure of mail data.
Fig. 24 is a diagram showing a specific example of a data structure of a media file.
Fig. 25 is a diagram showing a specific example of a data structure of thumbnail data.
Fig. 26 is a flowchart showing a mail display process.
Fig. 27 is a flowchart showing a mail display process.
Fig. 28 is a view showing a specific example of window transition.
Fig. 29 is a view showing a specific example of window transition.
Fig. 30 is a view showing a specific example of window transition.
Fig. 31 is a view showing a specific example of window transition.
Fig. 32 is a view showing a specific example of a program listing displayed on TV as a specific example of an information output device in accordance with the present invention.

### Description of Reference Characters

11 communication unit, 12 control unit, 13 storage unit, 14 input/output unit, 20 mail, 21 range, 100 mobile phone, 101 operation reception unit, 102 document selection unit, 103 document retention unit, 104 document analysis unit, 105 display management unit, 106 thumbnail processing control unit, 107 thumbnail creation unit, 108 thumbnail temporary retention unit, 109 advance processing management unit, 110 power supply management unit, 111 memory management unit, 141 operation unit, 142 display unit, 143 audio input unit, 144 audio output unit, 145 image acquisition unit.

### Best Modes for Carrying Out the Invention

In the following, the embodiments of the present invention will be described with reference to the figures. In the following description, the same parts and components will be denoted with the same reference characters. Their designations and functions are also the same. Therefore the detail description thereofwill not be repeated.

In the present embodiment, an information output device in accordance with the present invention is realized by a mobile phone 100 and the data to be handled is document data for the sake of illustration. However, the specific example of the information output device is not limited to a mobile phone but may be any other device such as personal computers, PDA (Personal Digital Assistants), or a television receiver, and the data to be handled is not limited to document data but may be any other data such as music data, video data, or TV program data. It is noted that in the following description, a thumbnail image that is an image for presenting an outline will be simply abbreviated as a thumbnail.

### [First Embodiment]

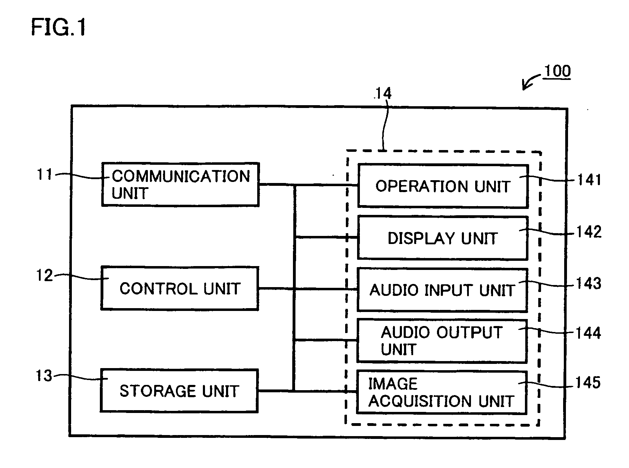

Referring to Fig. 1, a mobile phone 100 in accordance with the present embodiment is configured to include a control unit 12 formed of a CPU (Central Processing Unit) or the like for controlling the entire mobile phone 100, a communication unit 11 for communications with other devices, a storage unit 13 formed of an ROM (Read Only Memory), an RAM (Random Access Memory), or the like for storing a program executed in control unit 12, intermediate data of the program, and data received from another computer, and an input/output unit 14 serving as a user interface.

Furthermore, the input/output unit 14 described above is configured to include an operation unit 141 including numerical buttons of "1", "2", and the like and direction buttons of "R", "L", and the like, a display unit 142 such as an LCD (Liquid Crystal Display) displaying information for the user, an audio input unit 143 such as a microphone for inputting audio, an audio output unit 144 such as a speaker for outputting audio, and an image acquisition unit 145 such as a camera for picking up an image of a subject and acquiring a picked-up image.

It is noted that the hardware configuration shown in Fig. 1 is a hardware structure of a general mobile phone, and the hardware configuration of the information output device in accordance with the present invention is not limited to the hardware configuration shown in Fig. 1.

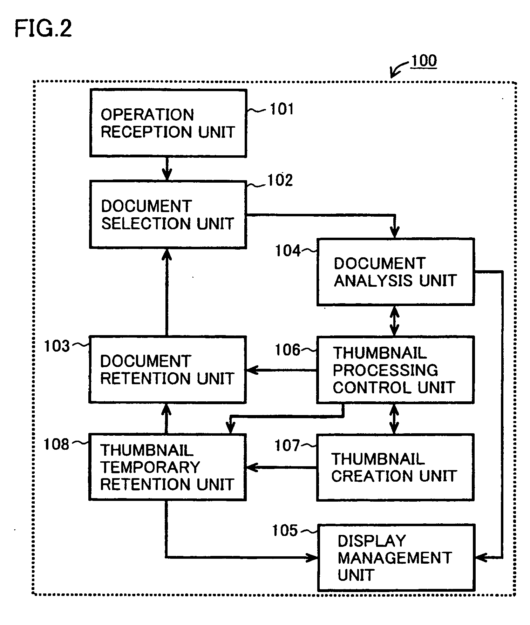

Now, Fig. 2 shows a specific example of a function configuration concerning a function of selecting and displaying a document displayed and a function of creating thumbnail data regarding a thumbnail that is information presenting the outline of the document in mobile phone 100 in accordance with the first embodiment. Referring to Fig. 2, mobile phone 100 in accordance with the present embodiment is configured to include an operation reception unit 101, a document selection unit 102, a document retention unit 103, a document analysis unit 104, a display management unit 105, a thumbnail processing control unit 106, a thumbnail creation unit 107, and a thumbnail temporary retention unit 108. These functions are fulfilled by control unit 12 reading a program stored in storage unit 13 and executing the program to control each component of the hardware configuration shown in Fig. 1.

Operation reception unit 101 is configured with operation unit 141, display unit 142, and the like to receive an operation input from the user. Display unit 142 outputs a window displaying a list of attributes (file names, senders, titles, and the like) for identifying a displayable document. The user uses operation unit 141 to perform a cursor moving operation of positioning a cursor on a given document, an operation of opening a document pointed to and selected by the cursor through that operation (giving an instruction to display the contents), and an operation of changing the operation setting of document display device 100 as a whole. Operation reception unit 101 then outputs information about the operation received from the user to document selection unit 102.

Document selection unit 102 specifies a document to be subjected to display processing and thumbnail creation processing based on the information input from operation reception unit 101 and reads document data from document retention unit 103. Document retention unit 103 is formed of a prescribed region of storage unit 13 to store document data. Document selection unit 102 then outputs the document data read from document retention unit 103 to document analysis unit 104.

Document analysis unit 104 analyzes the document data input from document selection unit 102 and outputs the analysis result to display management unit 105. When it is analyzed that media data is attached to the document data and the thumbnail image of this media data is also displayed, document analysis unit 104 outputs to thumbnail processing control unit 106 a request for obtaining thumbnail data based on the analysis result.

Thumbnail processing control unit 106 refers to the document data stored in document retention unit 103 based on the request received from document analysis unit 104 to search thumbnail temporary retention unit 108 for any corresponding thumbnail data. If the corresponding thumbnail data is extracted from thumbnail temporary retention unit 108, information indicating the location of the thumbnail data is output to document analysis unit 104. On the other hand, if no corresponding thumbnail data exists in thumbnail temporary retention unit 108, a request for creating a thumbnail is output to thumbnail creation unit 107.

Thumbnail creation unit 107 creates thumbnail data based on the request received from thumbnail processing control unit 106 and outputs the completed thumbnail data to temporary retention unit 108 for retention. Thumbnail temporary retention unit 108 is formed of a prescribed region of storage unit 13 serving as a work area for thumbnail creation to hold intermediate data, which is in process of creation, and it also temporarily holds completed thumbnail data. The completed thumbnail data may be passed from thumbnail temporary retention unit 108 to document retention unit 103 and retained together with document data in document retention unit 103. Then, when the document is opened through the user operation next time, the thumbnail data retained in thumbnail temporary retention unit 108 is used.

Thumbnail creation unit 107 outputs information indicating the location of thumbnail data to thumbnail processing control unit 106, and thumbnail processing control unit 106 outputs that information to document analysis unit 104. During thumbnail data creation, thumbnail creation unit 107 outputs information indicating the location of intermediate data to thumbnail processing control unit 106, and thumbnail processing control unit 106 outputs that information to document analysis unit 104.

Document analysis unit 104 outputs to display management unit 105 the thumbnail data input from thumbnail processing control unit 106 or the information indicating the location of intermediate data, together with the analysis result of the document data.

Display management unit 105 manages the display in display unit 142 and outputs the analysis result input from document analysis unit 104 to display unit 142. When the information indicating the location of thumbnail data is input from document analysis unit 104, the thumbnail data or intermediate data is read according to the information, and the thumbnail is output together with the analysis result to display unit 142.

Now, description will be made to the case where the document data handled by mobile phone 100 in accordance with the present embodiment is mail data and a thumbnail of a media file attached to a mail is handled.

A media file attached to a mail is intended to be text, still image, animation, moving image, audio, music, and vector graphics data such as SVG (Scalable Vector Graphics), and data created by integrating theses data into one data in a format in conformity with XML (Extensible Markup Language) or any other format.

Furthermore, the thumbnail for these media files is intended mainly in the form of: image data with a reduced pixel size if the media file is a still image; image data created by extracting as a still image the data displayed in a given reproduction time during a reproduction period of time and reducing the pixel size if the media file is animation or moving images; information of an extension indicating a file format, or image data representing such information as an icon image if the media file is text, audio, and music; and vector graphics data with each vector reduced in size in data if the media file is vector graphics data.

As for the media such as animation or moving images formed of a plurality of display data arranged along the time axis, display data at any given number of reproduction times in a reproduction period of time may be extracted as still images and reduced, resulting in a plurality of thumbnails.

Alternatively, as for a document formed of one or more slides including layout information in which one or more of text, still images, animation, moving images, audio, music, and vector graphics data are laid out in two-dimensional coordinates (referred to as a slide), for example, a presentation document in which a plurality of slides are switched and displayed over time or by the user operation, each slide with a reduced pixel size may be a thumbnail.

Alternatively, as for individual media data such as text, still images, animation, moving images, audio, music, and vector graphics data included in the above-noted presentation document, thumbnail data may be created and displayed as described above, separately from the thumbnail of the presentation document.

In the following example, a file attached to a mail is still image data and the still image data with a reduced pixel size is treated as a thumbnail. However, the thumbnail may take a variety of forms as listed above, as a matter of course.

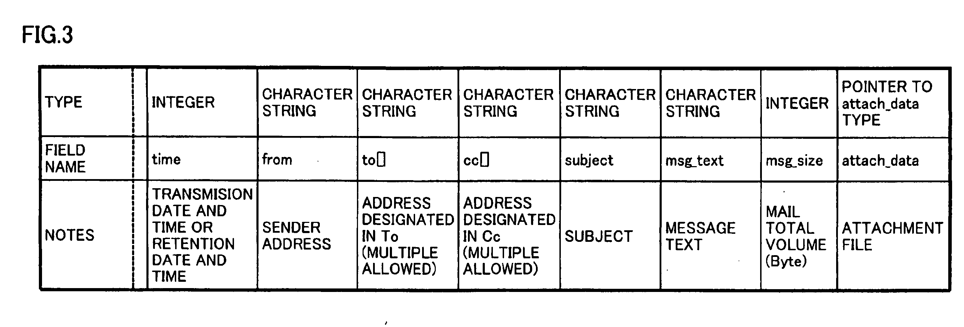

First, a data structure of mail data that is document data handled by mobile phone 100 in accordance with the present embodiment will be described with reference to Fig. 3. Referring to Fig. 3, the mail data is configured to include integer-type information (field name "time") indicating the date and time at which the mail is sent or the date and time at which the mail data is retained, character string-type information (field name "from") indicating the address of the sender of the mail, character string-type information (field name "to") indicating the address of the mail, character string-type information (field name "cc") indicating the multiple addresses of the mail, character string-type information (field name "subject") indicating the subject of the mail, character string-type information (field name "msg_text) indicating the text of the mail, integer-type information (field name "msg_size") indicating the total volume of the mail, and pointer-type information (field name "attach_data") indicating where to access in document retention unit 103 storing a media file attached to the mail.

The data structure of the mail data specifically shown in Fig. 3 is retained in document retention unit 103. Of the information as described above, the information with field name "time" to field name "msg_size" is obtained from the mail data by document analysis unit 104 analyzing the mail data received by communication unit 11. The information of field name "attach_data" is information included in the mail data in such a manner that the media file attached to the mail received by communication unit 11 is stored in document retention unit 103 and the information of its storage location is then written by document analysis unit 104. The mail data may be analyzed in document retention unit 103 every time the mail display process as described later is carried out, or it may be analyzed when received at communication unit 11, and then expanded in a data structure and retained in document retention unit 103.

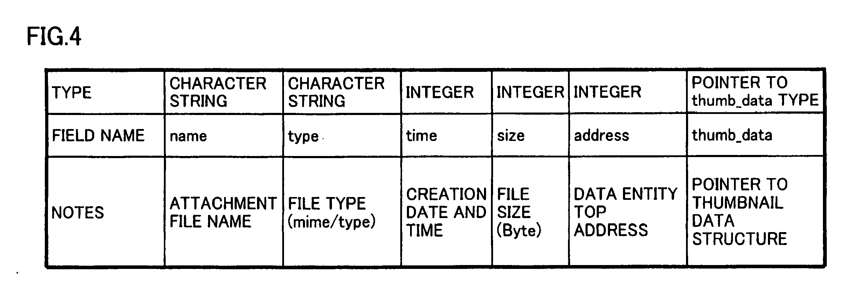

The data structure of a media file attached to a mail is further described with reference to Fig. 4. Referring to Fig. 4, the media file is configured to include character string-type information (field name "name") indicating the name of the media file, character string-type information (field name "type") indicating the type of the media file, integer-type information (field name "time") indicating the date and time at which the media file is created, integer-type information (field name "address") indicating where to access the top of the text information in storage unit 13 storing the text information of the media file, and pointer-type information (field name "thumb_data") indicating where to access in thumbnail temporary retention unit 108 or document retention unit 103 storing the thumbnail data of the media file.

The data structure of the media file specifically shown in Fig. 4 is data of a media file retained in document retention unit 103. Of the information as described above, field name "name" to field name "size" is information obtained from a media file by document analysis unit 104 analyzing the media file attached to the mail data received by communication unit 11. The information with field name "address" is information included in the media data in such a manner that the text information of the media file attached to the mail received by communication unit 11 is stored in document retention unit 103 and the information of its storage location is written by document analysis unit 104. The information with field name "thumb_data" is information included in the media data in such manner that the information indicating the location of the thumbnail data or intermediate data created from thumbnail creation unit 107 is received and updated by document analysis unit 104.

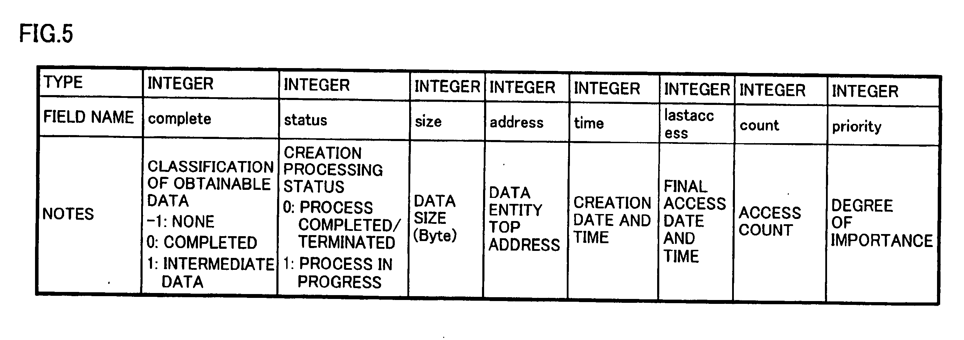

The data structure of thumbnail data that is data representing a thumbnail presenting the outline of a media file will be described with reference to Fig. 5. Referring to Fig. 5, thumbnail data is configured to include: integer-type information (field name "complete") indicating presence/absence and completion/incompletion of a thumbnail obtainable in display management unit 105 for the media file, specifically, any one of "-1" indicating no thumbnail, "0" indicating completion of a thumbnail, and "1" indicating the presence of intermediate data; integer-type information (field name "status") indicating the status of the thumbnail creation process, specifically, any one of "0" indicating the completion or termination of the thumbnail creation process and "1" indicating the in-progress of the thumbnail creation process; integer-type information (field name "size") indicating the size of the thumbnail; integer-type information (field name "address") indicating where to access the top of the text information in thumbnail temporary retention unit 108 or document retention unit 103 storing the text information of the thumbnail; integer-type information (field name "time") indicating the date and time at which the thumbnail creation process for creating the thumbnail has been completed; integer-type information (field name "lastaccess") indicating the date and time at which the thumbnail was accessed last time; integer-type information (field name "count") indicating the number of times the thumbnail data is accessed; and integer-type information (field name "priority") indicating the degree of importance of the thumbnail data.

The data structure of the thumbnail data specifically shown in Fig. 5 is retained in thumbnail temporary retention unit 108. Each information as described above is information included in the thumbnail data, which is obtained and written by thumbnail processing control unit 106 from thumbnail creation unit 107 during the creation or the completion of creation in thumbnail creation unit 107, or the access of thumbnail data.

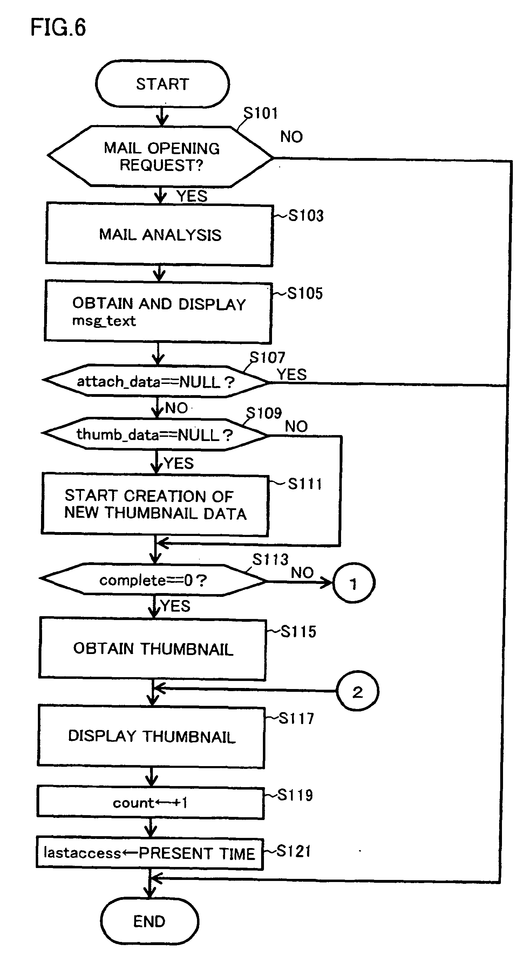

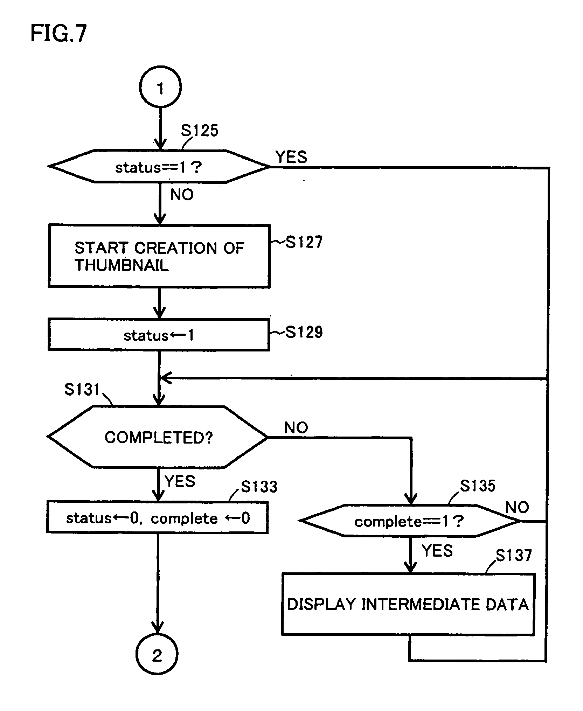

The process executed when the user performs the operation of opening a mail in the mail application of mobile phone 100 in accordance with the first embodiment will now be described with reference to Figs. 6-8. The process shown in the flowcharts in Figs. 6 and 7 is realized by control unit 12 of mobile phone 100 reading and executing a program for executing the mail application stored in storage unit 13 to cause each function shown in Fig. 2 to be fulfilled.

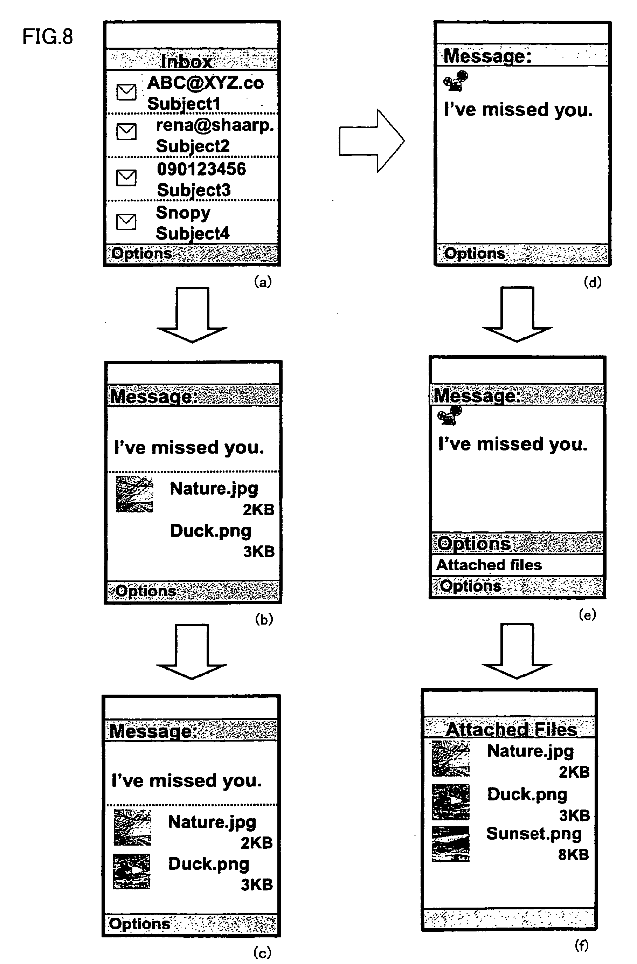

First, when the execution of the mail application is started, a list of mail files retained in document retention unit 103 is obtained in display management unit 105, and a list of mails in the in-box is displayed in display unit 142. A specific example of an in-box mail list display window is shown in Fig. 8(a). Referring to Fig. 8(a), in the in-box mail list display window, the mail addresses of senders of mails in the in-box (document retention unit 103) and the subjects of the mails are displayed in a list. A selected mail pointed to by a cursor (in Fig. 8(a), the mail with a subject name "Subjectl") is highlighted. The cursor is moved by operating up/down keys included in operation unit 141 and the highlight display is accordingly moved.

The operation of opening a selected mail pointed to by the cursor in the in-box mail list display window shown in Fig. 8(a) (for example, an operation of pressing a decision key included in operation unit 141) is performed, and when document selection unit 102 receives operation information from operation reception unit 101 (YES at S101), the mail data is analyzed in document analysis unit 104 (S103). At step S103, document analysis unit 104 expands the mail data into the data structure as shown in Fig. 3 and extracts the text and the media file attached to the mail data (abbreviated as an attachment file hereinafter) with reference to the information with field name "msg_text" and information with field name "attach_data" of the mail data. It is noted that as described above the analysis of the mail data may be conducted before reception of a request for open, for example when the mail is received.

Document analysis unit 104 obtains the text from information with field name "msg_text" of the mail data based on the analysis result at step S103, and display management unit 105 allows the obtained text to be displayed in display unit 142 (S105).

Furthermore, if information with field name "attach_data" is empty (NULL) as a result of the analysis at step S103, that is, if no attachment file is extracted from the mail data (YES at S107), the process of opening the mail ends only with text display at step S105.

On the other hand, if there exists information with field name "attach_data" as a result of the analysis at step S103, that is, if any attachment file is extracted from the mail data (NO at S107), the media file is read from information with field name "attach_data" of the mail data and the attachment file is analyzed. As a result, if information with field name "thumb_data" of the media file is empty (NULL), that is, if there exists no thumbnail data (YES at S109), thumbnail data for the attachment file is created in thumbnail processing control unit 106 (S111). On the other hand, as a result of the analysis at step S109, if there exists information with field name "thumb_data" of the media file, that is, if there exists thumbnail data (NO at S109), skip the process at step S111 and go on to the next process.

Then, document analysis unit 104 reads thumbnail data from information with field name "thumb_data" of the media file and analyzes information with field name "complete". As a result if the information with field name "complete" is "0", that is, if a created thumbnail has already existed (YES at S 113), the thumbnail is obtained according to information with field name "address" (S 115) and displayed in display unit 142 together with the text by display management unit 105 (S 117). The specific example of display window of the text and thumbnail displayed at step S 117 is shown in Fig. 8(b). Here, as shown in Fig. 8(b), the thumbnail obtained at step S115 is displayed together with the previously obtained text.

It is noted that in the present embodiment a created thumbnail has already existed: when the thumbnail creation process as described below has already been carried out so that the created thumbnail data is retained in thumbnail temporary retention unit 108; when the attachment file is originally handled by other functions or applications of mobile phone 100 so that a thumbnail has already been created through such functions or applications (for example, when a file of an image picked up by a camera is retained in a retention region in mobile phone 100, thumbnail data is also created and retained); or when the thumbnail itself is transmitted while being attached to a mail.

Thumbnail processing control unit 106 then increments by 1 the access count that is information with field name "count" of the thumbnail data (S 119), and updates information with field name "lastaccess" to the present time (S121).

On the other hand, as a result of the analysis at step S 113, if information with field name "complete" is not "0", that is, if there exists no created thumbnail (NO at S113), referring to Fig. 7, document analysis unit 104 further analyzes information with field name "status". As a result, if information with field name "status" is "0", that is, if the thumbnail creation process is not started (NO at S125), thumbnail processing control unit 106 requests thumbnail creation unit 107 to create a thumbnail, so that the thumbnail creation process is started (S127). Thumbnail processing control unit 106 then updates information with field name "status" to "1" (S129). It is noted in that case, the existence of any attachment file or the names or numbers of the attachment files are preferably displayed together with the text in the text display window shown in Fig. 8(b).

While the thumbnail creation process has not been completed (NO at S131), document analysis unit 104 analyzes information with field name "complete" of the thumbnail data. As a result, if the information with field name "complete" is "-1", that is, if there exists no displayable intermediate data (NO at S 135), the process waits for displayable data coming into existence. Then, when the thumbnail creation process has been completed (YES at S131), thumbnail processing control unit 106 updates information with field name "status" to "0" and information with field name "complete" to "0" (S 133). Furthermore, display management unit 105 allows display together with text in display unit 142 (S117). The specific example of display window of the text and thumbnail displayed at step S117 is shown in Figs. 8(b) and 8(c). In Fig. 8(b), the thumbnail obtained at step S115 is displayed together with the previously extracted text. Alternatively, when thumbnail data for a plurality of attachment files are successively created at steps S125-S137, as shown in Fig. 8(c), they are displayed in the order created. Figs. 8(b) and 8(c) show that the thumbnail data for the attachment files "Nature.jpg" and "Duck.png" of mail data "subject1" are created in the attachment order and the thumbnails are displayed in the attachment order.

It is noted that although Figs. 8(b) and 8(c) specifically show that the text in the mail and the thumbnail of the attachment file are displayed in the same window, the thumbnail of the attachment file may be displayed in another window separately from the text. For example, when the highlighted mail in Fig. 8(a) is opened, as a result of the analysis process, for example as shown in Fig. 8(d), only the text is first displayed. From that window, for example as shown in Fig. 8(e), "Options" is selected, and in response to the user's key operation to select "Attached files", the thumbnail of the attachment file may be displayed in a list in a different window separately from the text as shown in Fig. 8(f). In this case, in the window in which the text is displayed (Fig. 8(d)), it is more preferable to display an icon image indicating the existence of the attachment file and the number of attachment files, thereby increasing the user's convenience.

Furthermore, as shown in Fig. 8(b), Fig. 8(c), Fig. 8(f), in the thumbnail display window for the attachment file, not only the thumbnail but also the name and size of the individual attachment file, the date and time of creation, and the attribute such as the file type may also be displayed in the form of text or icons. Therefore, more preferably, even during the course of displaying a thumbnail, the content of the file can be assumed to some extent based on the name of the file, and the time required to display the thumbnail can be assumed to some extent with reference to the size description of the file, thereby increasing the user's convenience.

In this manner, thumbnails that are information presenting the outlines of attachment files are displayed in a list, so that the user can grasp the outlines of contents of the attachment files and can distinguish between useful data and unnecessary data for the user to some extent without actually opening attachment files. In particular, it is convenient that the contents can be grasped smoothly when a plurality of attachment files exist.

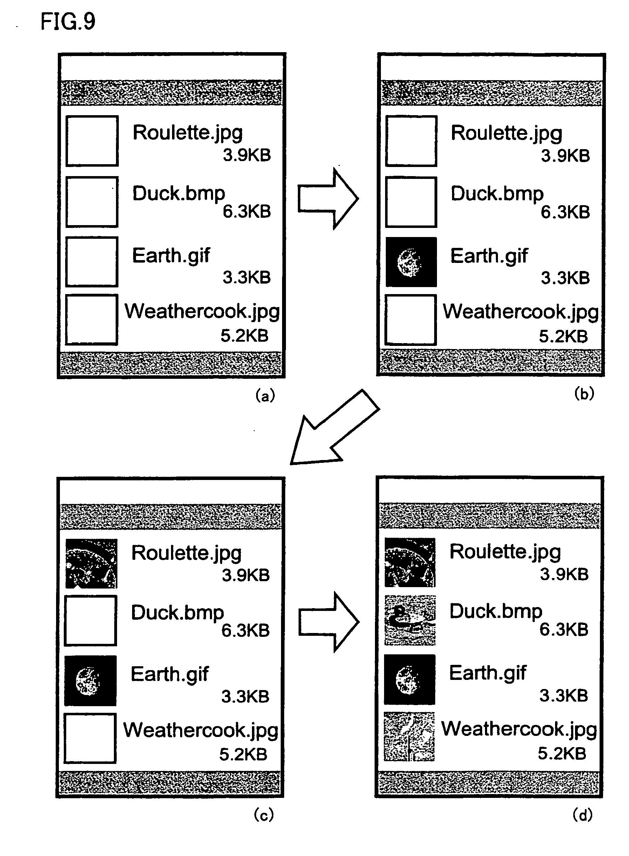

It is noted that when a plurality of media files are attached to one mail, as shown in Fig. 8, the thumbnail creation process may be started in the order attached or may be started in the order irrelevant to the order attached. In another specific example, the starting order of the thumbnail creation process may be based on the file size. The specific example of transition of windows displayed in display unit 142 in that case is shown in Fig. 9.

Referring to Fig. 9, attachment files "Roulette.jpg", "Duck.jpg", "Earth.gif', and "Weathercook.jpg" for which thumbnail data are to be created are attached to a mail in this order. Here, at step S127, having received a request to obtain thumbnail data from document analysis unit 104, thumbnail processing control unit 106 compares the four attachment files described above in size, and requests thumbnail creation unit 107 to create thumbnail data for "Earth.gif" of the smallest size. Then, the created thumbnail of "Earth.gif" is first displayed. Fig. 9(b) is a view showing a specific example of window display in which only the thumbnail of the smallest attachment file is displayed.

Then, thumbnail creation unit 107 is requested to create thumbnail data for "Roulette.jpg" of the second smallest size. The created thumbnail of "Roulette.jpg" is thereafter displayed. Fig. 9(c) is a view showing a specific example of window display in which the thumbnail of the second smallest attachment file is also displayed. In this way, thumbnail data is created and thumbnails are displayed in ascending order of size of attachment files. As shown in Fig. 9(d), finally, the thumbnails of all the attachment files are displayed.

Usually, the time required to create a thumbnail is shorter as the file size of an attachment file is smaller. Therefore, with the employment of the above method, a completed thumbnail is displayed at the earlier stage, thereby alleviating the user's stress.

In addition, when a plurality of media files are attached to one mail, the order in which thumbnails are arranged and displayed on a window may be the same as the order attached as shown in Fig. 8 or Fig. 9 or may be different. For example, thumbnails may be arranged and displayed in the order their thumbnail processes have been completed.

Thus, more completed thumbnails and less files of which thumbnails are incomplete can be displayed in a window.

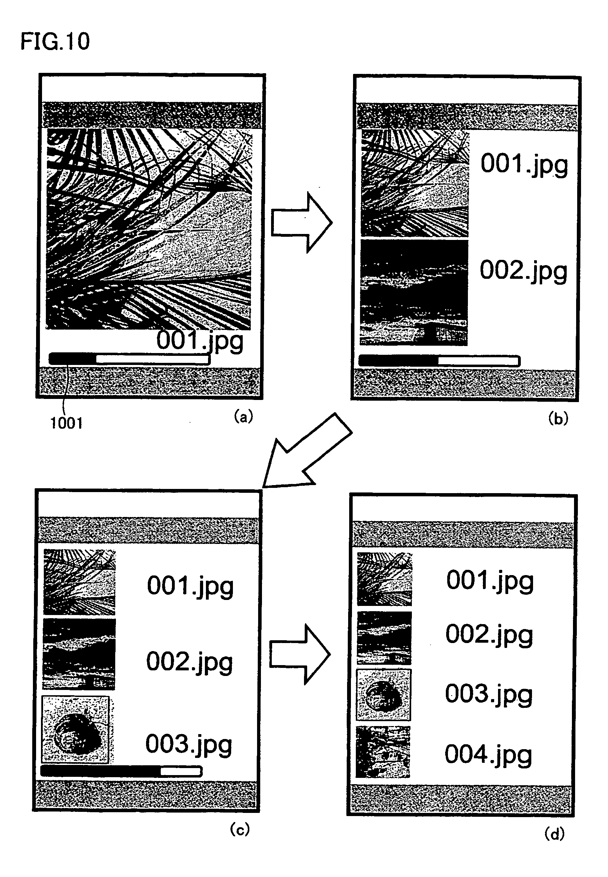

Furthermore, when a plurality of media files are attached to one mail, the form of thumbnail list display may be varied according to the progress of the thumbnail creation process for each file. Fig. 10 is a view showing a specific example of transition of windows displayed in display unit 142 in such a case.

Thumbnail data for attachment files "001.jpg", "002.jpg", "003 .jug", and "004.jpg" of which thumbnail data is to be created is created in this order, and thumbnails are displayed in the order created. Here, at step S 117, having obtained thumbnail data according to information with field name "address" of the thumbnail data, display management unit 105 controls the display in display unit 142 such that the thumbnail is displayed in a large size in the entire region for displaying thumbnails in a list upon completion of the thumbnail data of "001.jpg" (Fig. 10(a)), the thumbnail of "001.jpg" and the thumbnail of "002.jpg" are thereafter arranged and displayed in that region upon completion of the thumbnail data for "002.jpg" (Fig. 10(b)), the thumbnail of "001.jpg", the thumbnail of "002.jpg", and the thumbnail of "003 .jpg" are thereafter arranged and displayed in that region upon completion of the thumbnail data for "003.jpg" (Fig. 10(c)), and the thumbnail of "001.jpg", the thumbnail of"002.jpg", the thumbnail of"003.jpg", and the thumbnail of"004.jpg" are finally arranged and displayed in that region upon completion of the thumbnail data for "004.jpg" (Fig. 10(d)).

With the employment of the above display method, a blank space in the display caused by incompletion of a thumbnail can be decreased, and in addition, the display form is successively changed, thereby effectively eliminating the user's boredom until completion of the display.

It is noted that, with the employment of the above display method, it may be difficult to show at a glance how many incomplete thumbnails are presently left and what percentage of the thumbnail creation process of the total has progressed. Therefore, text indicating the degree of progress (for example, display of "2/4" in the state where two out of the total four have been completed and displayed), or graphics such as a progress bar is preferably displayed together with the thumbnail list. Display 1001 shown in Fig. 10 is illustrative display using a progress bar. In the state in Fig. 10(a) where one of total four thumbnails to be created has already been created and displayed, about one-quarter of the bar is highlighted. Similarly, in Fig. 10(b), about a half is highlighted, and in Fig. 10(c), about three-quarters is highlighted. In Fig. 10(d) where all of the four thumbnails have been completed, the function of the progress bar ends and is not displayed.

Returning to the description of the process of opening a mail in mobile phone 100, as a result of the analysis at step S125, when information with field name "status" is "1", that is, when the thumbnail creation process is in progress (YES at S125) and when the creation is not completed (No at S 131), document analysis unit 104 analyzes information with field name "complete" of the thumbnail data. As a result, if information with field name "complete" is "1", that is, if there exists displayable intermediate data (YES at S135), display management unit 105 allows intermediate data to be displayed in display unit 142 (S137).

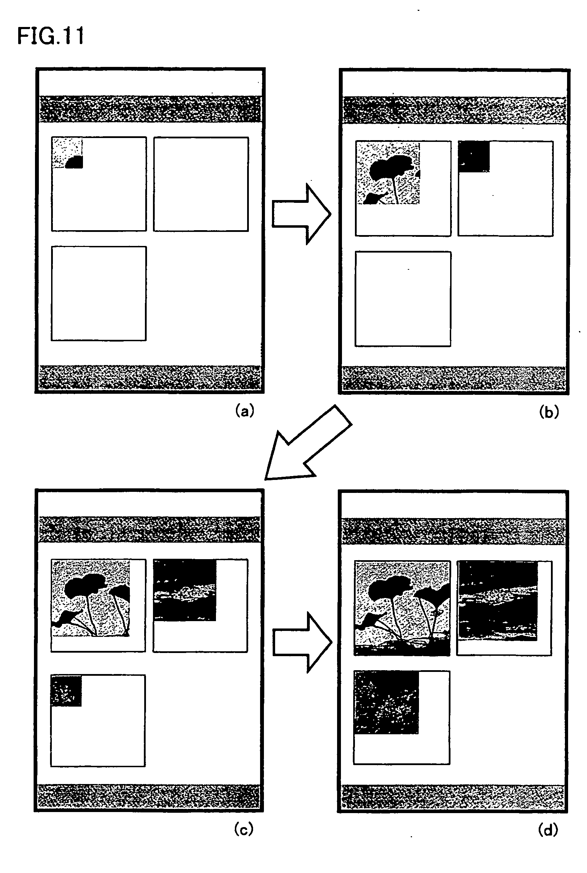

A first specific example of display window of intermediate data displayed at step S 13 7 is shown in Fig. 11. In the first specific example, at step S127, thumbnail creation unit 107 executes the thumbnail creation process for an image file from the upper-left point toward the lower-right point of an image and retains a thumbnail as being created in stages in thumbnail temporary retention unit 108 as intermediate data. At step S 137, display management unit 105 displays the thumbnail in process of creation as intermediate data in stages in a region of the display window for displaying a thumbnail. Specifically, the upper-left thumbnail that is the first thumbnail of the thumbnails displayed in display unit 142 is displayed in stages from the upper-left point toward the lower-right point in Fig. 11(a) to Fig. 11(d). At the same time, the upper-right thumbnail that is the second thumbnail is also displayed in stages from the upper-left point toward the lower-right point, behind the first thumbnail display.

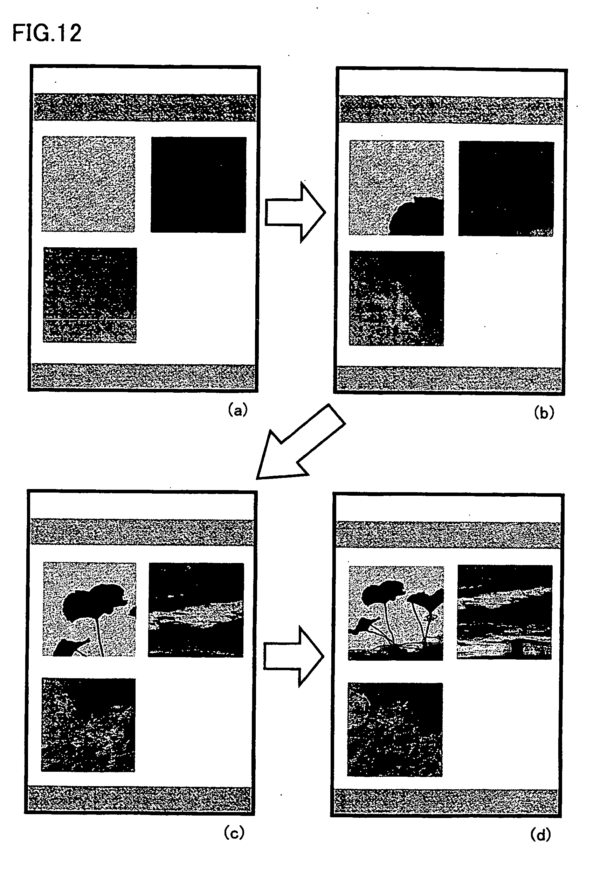

A second specific example of display window of the intermediate data displayed at step S 13 7 is shown in Fig. 12. Also in the second specific example, similar to the first specific example, at step S127, thumbnail creation unit 107 executes the thumbnail creation process for an image file from the upper-left point toward the lower-right point of an image and retains a thumbnail as being created in thumbnail temporary retention unit 108 in stages as intermediate data. In the second specific example, at step S137, display management unit 105 enlarges the thumbnail in process of creation as intermediate data in the pixel size of the final thumbnail and displays the enlarged thumbnail in a region of the display window for displaying a thumbnail. Specifically, as for the upper-left thumbnail that is the first thumbnail of the thumbnails displayed in display unit 142, the thumbnail created in stages from the upper-left point toward the lower-right point is enlarged in the pixel size of the final thumbnail and displayed in Fig. 12(a) to Fig. 12(d).

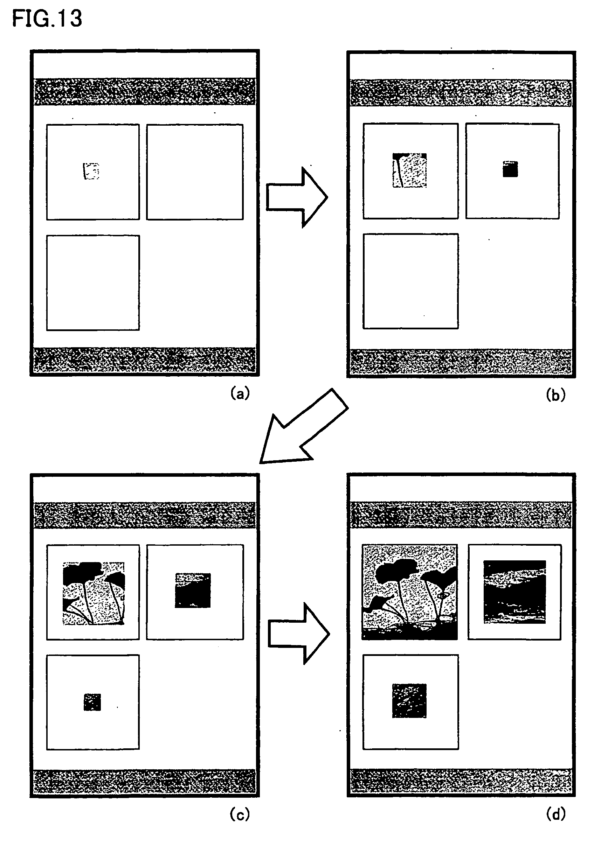

It is noted that the order of creating a thumbnail in thumbnail creation unit 107 is not limited to the order from the upper-left point toward the lower-right point of an image. A thumbnail may be created in any other order. For example, a thumbnail may be created from the middle toward the peripheral portion of an image. A third specific example of display window of the intermediate data displayed at step S 137 in such a case is shown in Fig. 13. Also in the third specific example, similar to the first specific example, at step S127, thumbnail creation unit 107 executes the thumbnail creation process for an image file from the middle toward the peripheral portion of the image and retains the thumbnail in process of creation in stages in thumbnail temporary retention unit 108 as intermediate data. At step S137, display management unit 105 displays the thumbnail in process of creation as intermediate data in stages in a region of the display window for displaying a thumbnail. Specifically, the upper-left thumbnail that is the first thumbnail of the thumbnails displayed in display unit 142 is displayed in stages from the middle toward the peripheral portion in Fig. 13(a) to Fig. 13(d).

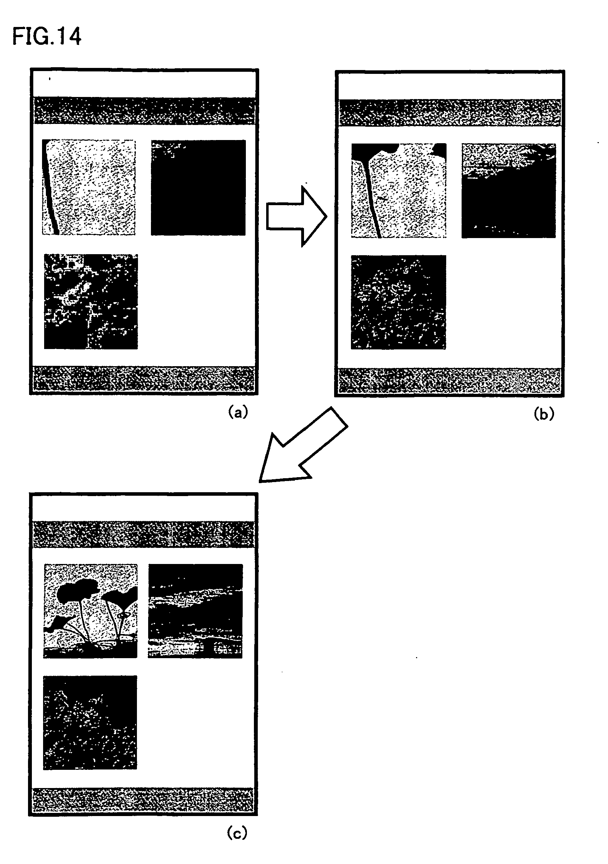

Alternatively, as described above, at step S137, display management unit 105 may enlarge the thumbnail in process of creation as intermediate data in the pixel size of the final thumbnail and display the enlarged thumbnail in a region of the display window for displaying a thumbnail. A fourth example of display window of the intermediate data displayed at step S 13 7 in such a case is shown in Fig. 14. As for the upper-left thumbnail that is the first thumbnail of the thumbnails displayed in display unit 142, the thumbnail created in stages from the middle toward the peripheral portion is enlarged in the pixel size of the final thumbnail and displayed in Fig. 14(a) to Fig. 14(d).

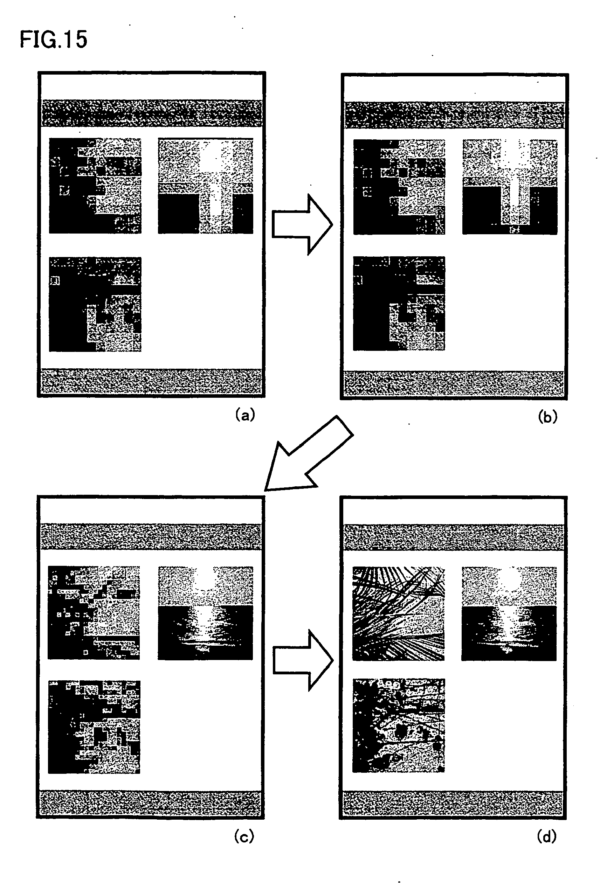

A fifth specific example of display window of the intermediate data displayed at step S 13 7 is shown in Fig. 15. In the fifth specific example, at step S127, thumbnail creation unit 107 executes the thumbnail creation process for an image file from a low-frequency component to a high-frequency component in each block of an image and retains the thumbnail as being created in thumbnail temporary retention unit 108 in stages as intermediate data. At step S 13 7, display management unit 105 displays the thumbnail in process of creation as intermediate data in stages in a region of the display window for displaying a thumbnail (progressive display). Specifically, in Fig. 15(a) to Fig. 15(d), the thumbnail is displayed in stages from the low-frequency component to the high-frequency component in each block of the image.

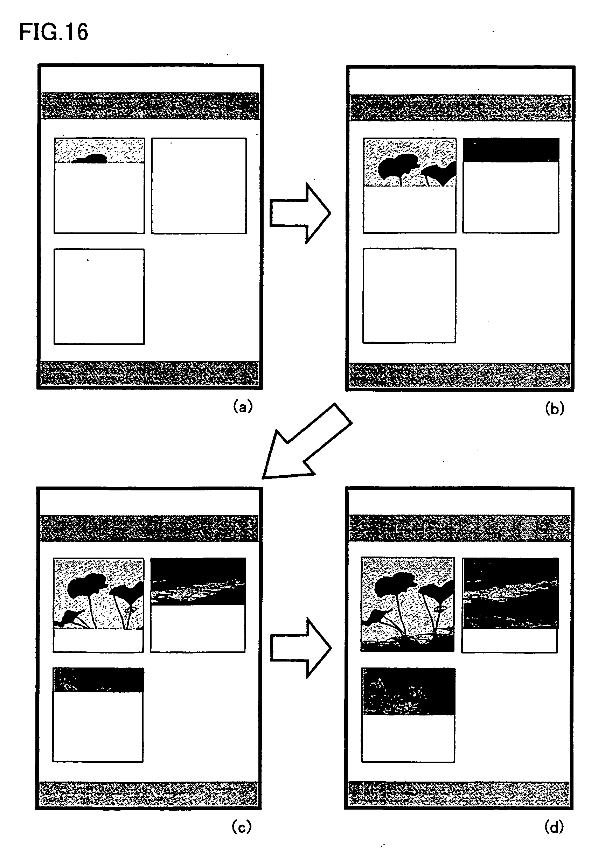

A sixth specific example of display window of the intermediate data displayed at step S137 is shown in Fig. 16. In the sixth specific example, at step S127, thumbnail creation unit 107 executes the thumbnail creation process for an image file from the upper portion toward the lower portion of an image and displays the thumbnail as being created in thumbnail temporary retention unit 108 in stages as intermediate data. At step S137, display management unit 105 displays the thumbnail in process of creation as intermediate data in stages in a region of the display window for displaying a thumbnail. Specifically, the upper-left thumbnail that is the first thumbnail of the thumbnails displayed in display unit 142 is displayed in stages from the upper portion toward the lower portion in Fig. 16(a) to Fig. 16(d).

As described above, in the first to sixth specific examples, intermediate data that is image data during the course of the thumbnail creation process is displayed at step S 137 by way of illustration. Alternatively, any other image data independent of an original image file may be displayed as alternative data. In this case, thumbnail creation unit 107 sets image data stored in storage unit 13 beforehand or generated image data as alternative data until the thumbnail creation process has been completed. It is noted that a plurality of alternative data may be set or generated for one thumbnail and switched several times until the thumbnail creation process has been completed.

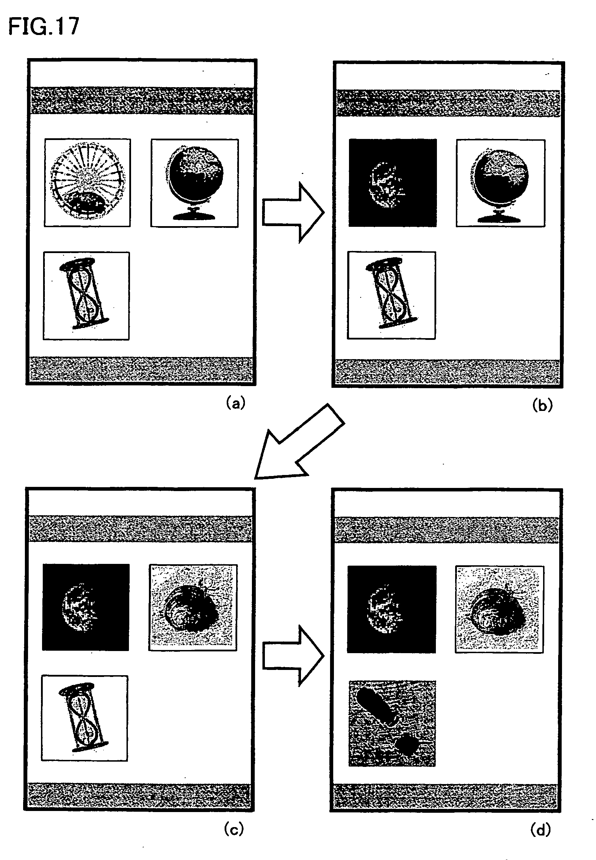

Fig. 17 shows a specific example of an alternative data display window when alternative data is displayed at step S137. In this case, at step S127, thumbnail creation unit 107 sets or generates alternative data in place of a thumbnail until the thumbnail creation process has been completed. Then, display management unit 105 displays the alternative data in a region of the display window for displaying a thumbnail, at step S 137. Specifically, as for the upper-left thumbnail that is the first thumbnail of the thumbnails displayed in display unit 142, an image as alternative data is displayed in Fig. 17(a) when the thumbnail creation process has not been completed, and a thumbnail is displayed in Fig. 17(b) when the thumbnail creation process has been completed. Similarly, as for the upper-right thumbnail that is the second thumbnail, an image as alternative data is displayed in Fig. 17(a) and Fig. 17(b) when the thumbnail creation process has not been completed, and a thumbnail is displayed in Fig. 17(c) when the thumbnail creation process has been completed.

Another specific example of a thumbnail displayed at step S 137 may be image data filled with the average value of RGB values of pixels at one or more points within an original image file. Alternatively, it may be image data with a reduced pixel size of an original image file or image data with a reduced number of colors.

As described above, in mobile phone 100 as an information output device in accordance with the present invention, thumbnails of attachment files are displayed in a list, so that the user can grasp the outlines of contents of the attachment files and distinguish between useful data and unnecessary data for the user to some extent without opening the attachment files. In particular, it is convenient that when a plurality of attachment files exist, their outlines can be grasped smoothly.

In addition, in mobile phone 100 as an information output device in accordance with the present invention, intermediate data that is under course of the thumbnail creation process is displayed in stages, so that the user's desire to take a look at the content of each thumbnail as early as possible can be satisfied.

Moreover, in mobile phone 100 as an information output device in accordance with the present invention, alternative data is prepared. Therefore, even if the user opens a mail to find no thumbnail to be displayed, alternative data is displayed, thereby improving the user's convenience.

It is noted that although in the forgoing embodiment, a thumbnail or alternative data is created in mobile phone 100 receiving a mail, a thumbnail or alternative data may be created at a terminal device of the sending side or a server that relays mails.

However, when a thumbnail or alternative data is included in a mail to be sent, the receivable/transmissible data size of receiving mobile phone 100 may be exceeded, thereby disabling reception/transmission, or the increased amount of data may increase charges on senders or receivers. Therefore, the thumbnail or alternative data included in transmission data is preferably in a range that does not exceed the receivable/transmissible data size or in a range that does not increase charges on senders or receivers.

Furthermore, when mail sending terminal and receiving terminal both can refer to the same data serving as alternative data such as an icon image by designating a prescribed symbol or number, the symbol or number is sent together in mail transmission, so that the icon image or the like can be treated as alternative data. Accordingly, an increase in transmission data for alternative data can be minimized.

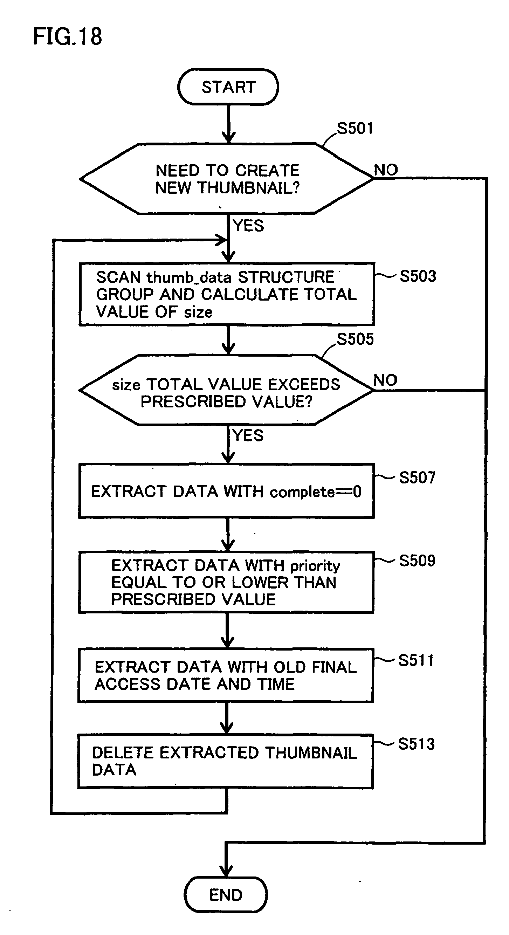

Now, mobile phone 100 in accordance with the present embodiment executes the above-described processing to retain the created thumbnail data in thumbnail temporary retention unit 108 that is a prescribed region of storage unit 13. As the above-described processing is repeated, the region for retaining the thumbnail data may be filled. In such a case, preferably, thumbnail temporary retention unit 108 refers to the attribute belonging to the retained thumbnail data and deletes or moves the data to another retention region (for example document retention unit 103) as appropriate. Here, the process of deleting or moving thumbnail data in mobile phone 100 in accordance with the present embodiment will be described with reference to the flowchart in Fig. 18. The process as shown in the flowchart in Fig. 18 is also realized by control unit 12 of mobile phone 100 reading and executing a program for executing a mail application stored in storage unit 13 to fulfill each function shown in Fig. 2.

Referring to Fig. 18, first, when a new thumbnail needs to be created, for example, when the processing at step S 127 as described above is executed (YES at S501), thumbnail processing control unit 106 scans the structure, shown in Fig. 4, of each thumbnail data retained in thumbnail temporary retention unit 108 and calculates the total data size of each thumbnail, which is information with field name "size" (S503).

It is noted that the condition that triggers the start of the thumbnail data deletion or moving process is not limited to when a new thumbnail needs to be created as described above but may be, for example, a prescribed period, when mobile phone 100 is powered on, when available memory becomes less than a prescribed amount, or any other prescribed timing.

Then, thumbnail processing control unit 106 compares the calculated total value with a prescribed preset value, and if the total value does not exceed the prescribed value (NO at S505), it is determined that the thumbnail data deletion or moving is unnecessary, and the process ends. Here, "prescribed value" may be preset as a value unique to mobile phone 100 and stored in storage unit 13 or set by the user's operation.

On the other hand, if the total value exceeds the prescribed value in the comparison at step S505 (YES at S505), the subsequent processing for deleting or moving the thumbnail data is executed, and the thumbnail data to be deleted or moved is extracted with reference to the condition according to the attribute of the multimedia data.

As a first condition, first, with reference to information with field name "complete" of the thumbnail data, the thumbnail data of which information with field name "complete" is "0", that is the thumbnail data for which thumbnail creation process has been completed, is extracted (S507).

Then, as a second condition, with reference to information with field name "priority" for the thumbnail data extracted at step S507, the thumbnail data of which importance that is information with field name "priority" is equal to or below a preset prescribed value, that is the thumbnail data of which importance is equal to or lower than a prescribed degree of importance, is extracted (S509). Here, "prescribed value" may also be preset as a value unique to mobile phone 100 and stored in storage unit 13 or may be set by the user's operation.

Then, as a third condition, with reference to information with field name "lastaccess" for the thumbnail data extracted at step S509, the thumbnail data with the smallest value of the information with field name "lastaccess", that is, the thumbnail data for which the last access to multimedia data is oldest, is extracted according to the display status of the thumbnail (S511).

Then, thumbnail processing control unit 106 deletes or moves the thumbnail data extracted at step S511 from thumbnail temporary retention unit 108 (S513).

Thereafter, the process returns to step S503 again, and the subsequent processing as described above is repeated until the total data size of the thumbnail data retained in thumbnail temporary retention unit 108 does not exceed the prescribed value (NO at S505).

It is noted that the conditions of the thumbnail data to be deleted or moved are not limited to the first to third conditions as listed above. The conditions may depend on the attributes of a thumbnail itself. For example, thumbnails may be deleted or moved in chronological order of creation date and time, thumbnails may be deleted or moved in descending order of the data size, thumbnail data may be deleted or moved in ascending order of costs such as the amount of processing or consumption power for creating thumbnails again or coding types for deriving the same, in consideration of time or consumption power for creation. Alternatively, the conditions may depend on the display status of thumbnails. For example, thumbnails that have not recently been displayed may be deleted or moved in order, or thumbnails may be deleted or moved in ascending order of display frequency.

Mobile phone 100 in accordance with the present embodiment executes the process of deleting or moving thumbnail data as described above, so that a thumbnail for an attachment file attached to a mail that is likely to be accessed in the near future can preferentially be retained, thereby improving the user's convenience.

Furthermore, when a plurality of potentially deleted thumbnail data exist in thumbnail temporary retention unit 108, thumbnail processing control unit 106 preferably takes control such that a deletion target is selected from thumbnail data of the files attached to one mail so as not to delete all the thumbnail data of a plurality of files attached to one mail, that is, so as to leave the thumbnail data of at least one attachment file for one mail. In this manner, when the user opens a mail, it is likely that at least one thumbnail can be displayed, thereby accelerating the thumbnail display for the mail and further improving the user's convenience.

Alternatively, thumbnail temporary retention unit 108 may carry out a process of reducing the data size rather than deleting or moving the potentially deleted thumbnail data. For example, the pixel size of the image may be reduced, the number of colors of the image may be reduced, or the thumbnail may be replaced with an alternative image such as an icon. In this manner, it is possible to display alternative data even if the user opens a mail to find no thumbnail to be displayed, thereby further improving the user's convenience.

### [Second Embodiment]

The hardware configuration of mobile phone 100 in accordance with a second embodiment is similar to the hardware configuration of mobile phone 100 in accordance with the first embodiment shown in Fig.1, and therefore the description thereof will not be repeated here.

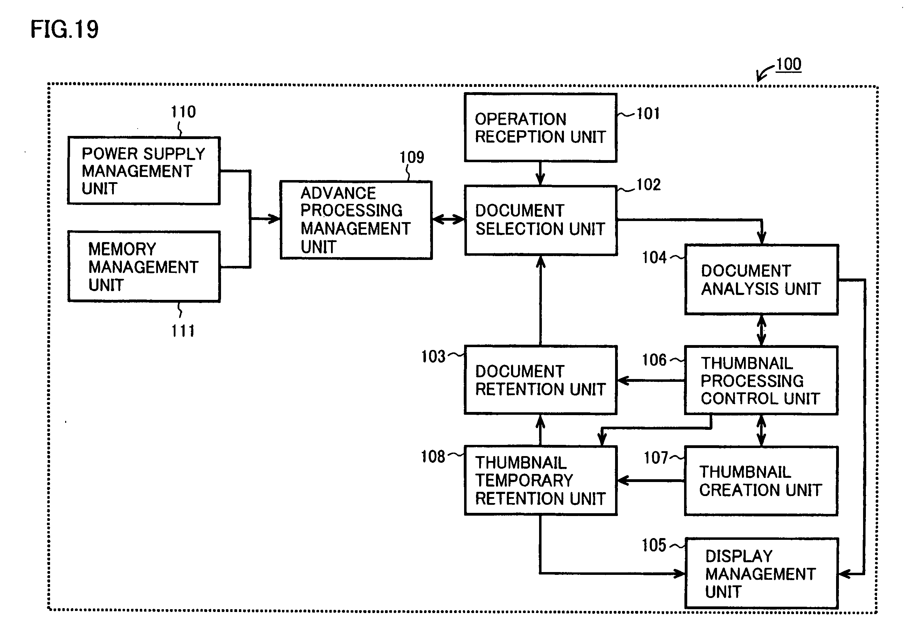

Fig. 19 shows a specific example of a functional configuration concerning a function of selecting and displaying a document displayed and a function of creating thumbnail data in mobile phone 100 in accordance with the second embodiment. Referring to Fig. 19, mobile phone 100 in accordance with the present embodiment is configured to further include an advance processing management unit 109, a power supply management unit 110, and a memory management unit 111, in addition to the functional configuration of mobile phone 100 in accordance with the first embodiment shown in Fig. 2. Those functions are also fulfilled by control unit 12 reading a program stored in storage unit 13 and executing the program to control each component of the hardware configuration shown in Fig. 1.

Advance processing management unit 109 obtains from document selection unit 102 information as to which document is presently pointed to and selected by the cursor in the document list window or which document is opened.

Power supply management unit 110 watches the remaining level of a battery as a power supply unit not shown in Fig. 1 and outputs information about the remaining battery level to advance processing management unit 109. Memory management unit 111 also watches the status of use of storage unit 13 and outputs information about the available remaining memory to advance processing management unit 109.

Then, advance processing management unit 109 requests document selection unit 102 to successively select the documents assumed to be next opened by the user's operation based on the information obtained from document selection unit 102 and causes document selection unit 102 to request a thumbnail from thumbnail processing control unit 106 through document analysis unit 104. At this point, information input from power supply management unit 110, information input from memory management unit 111, or the like is referred to.

In the following, the other functional configuration shown in Fig. 19 is similar to the function as described in the first embodiment, and therefore the description will not be repeated here. The data handled by mobile phone 100 in accordance with the present embodiment is also similar to the data handled by mobile phone 100 in accordance with the first embodiment, and therefore the description will not be repeated here.

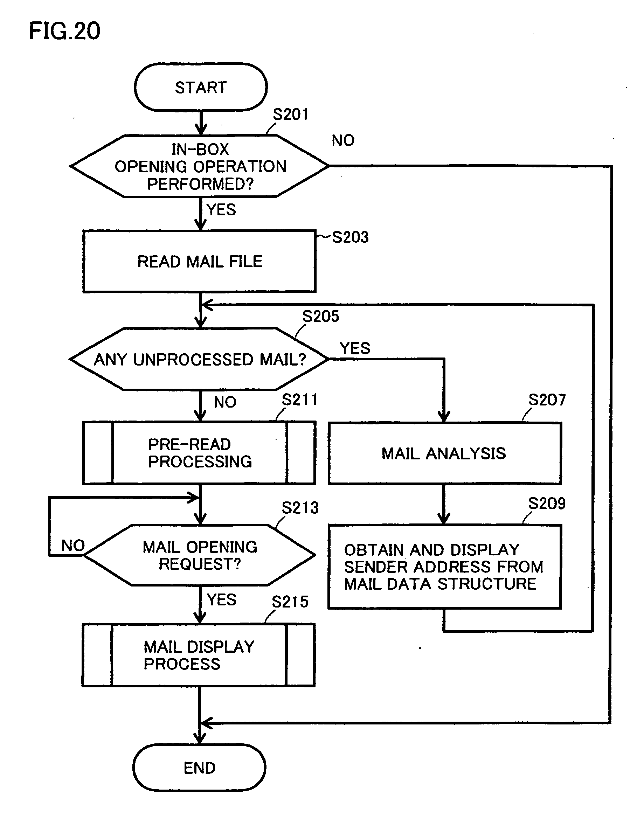

The processing executed when the user performs an operation of opening a mail in-box in the mail application of mobile phone 100 in accordance with the second embodiment will be described with reference to the flowchart in Fig. 20. The processing shown in the flowchart in Fig. 20 is also realized by control unit 12 of mobile phone 100 reading and executing a program for executing the mail application stored in storage unit 13 to fulfill each function shown in Fig. 2.

Referring to Fig. 20, first, when the execution of the mail application is started and the operation of opening the mail in-box is performed to cause document selection unit 102 to receive operation information from operation reception unit 101 (YES at S201), the mail file retained in document retention unit 103 is read in document analysis unit 104 (S203). If unprocessed mail data is included therein, which is not subjected to a process of expanding the mail data into the data structure as shown in Fig. 3 (YES at S205), such mail data is analyzed in document analysis unit 104 (S207). The processing at step S207 is similar to the processing at step S103 in the first embodiment, and the detailed description will not be repeated here. Document analysis unit 104 then obtains a sender mail address and the like from the mail data expanded into the data structure to be analyzed and displays the in-box (S209). The display window of the in-box appearing here is similar to the one described with reference to the specific example in Fig. 8(a) in the first embodiment, and therefore the description will not be repeated here.

If all the mail files read at step S203 are subjected to the process of expanding into the data structure (NO at S205), advance processing management unit 109 obtains from document selection unit 102 that these mail data are read, and executes pre-read processing for these mail data (S211). The pre-read processing refers to a process of making a thumbnail in advance for a file attached to a mail of which content is assumed to be displayed in the near future by the user's operation. The pre-read processing at step S211 will be detailed later with reference to a subroutine.

Then, when the operation of opening a mail pointed to by the cursor in the display window of the in-box (for example, the operation of pressing a decision key included in operation unit 141) is performed and document selection unit 102 receives the operation information from operation reception unit 101 (YES at S213), the mail display process is executed (S215). The mail display process at step S215 will also be detailed later with reference to a subroutine.

This is the end of the process in mobile phone 100 in accordance with the second embodiment.

The pre-read processing executed at step S211 as described above will now be described.

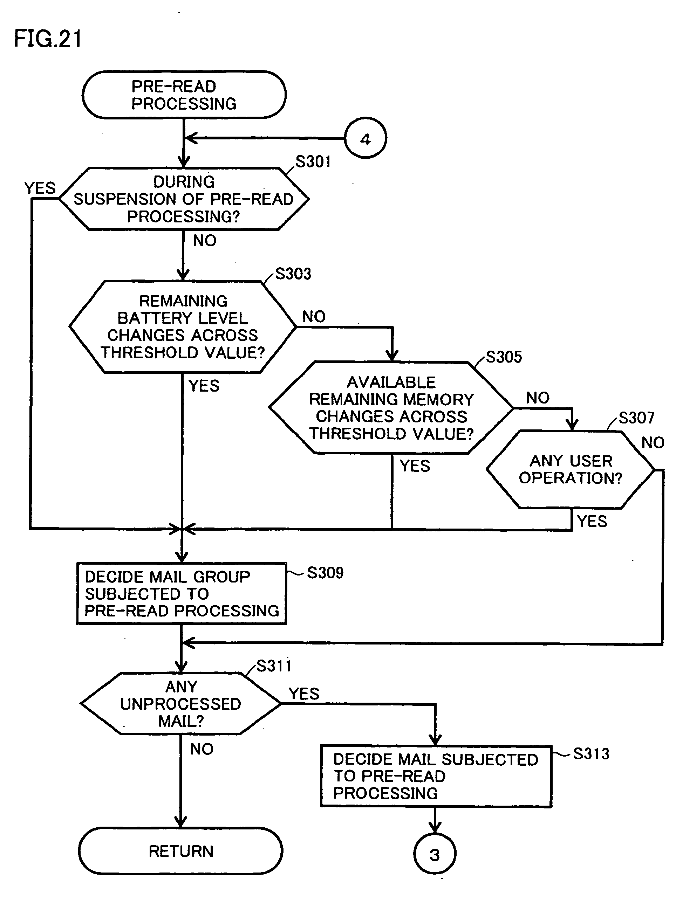

Referring to Fig. 21, upon execution of the pre-read processing at step S211 as described above (NO at S301), advance processing management unit 109 refers to the information about the remaining battery level input from power supply management unit 110, the information about the status of use of storage unit 13 input from memory management unit 111, and information about the user operation received at operation reception unit 101 through document selection unit 102, to determine whether or not each of the following conditions is met: whether or not there is any change in the remaining battery level across a threshold value (S303); whether or not there is any change in the available remaining memory across a threshold value (S305); and whether or not there is an operation from the user (S307). As a result of the determination at steps S303 to S307, if any one of the above conditions is satisfied, advance processing management unit 109 executes a process of deciding a mail group to be subjected to the pre-read processing (S309).

In this way, the mail group to be subjected to the pre-read processing preferably varies depending on the status information such as the remaining battery level or the available remaining memory in mobile phone 100. More specifically, as the remaining battery level is higher, a charger is connected, or the available remaining memory is higher, more mails are subjected to the pre-read processing. By contrast, preferably, as the remaining battery level is lower or the available remaining memory is lower, fewer mails are subjected to the pre-read processing or the pre-read processing is not carried out. Thus, it is possible to avoid battery exhaustion or interruption to execution of any other application of the mobile phone.

It is also preferable that the mail group to be subjected to the pre-read processing is varied as appropriate depending on a change in the window display status or the operation by the user to change the setting. In other words, preferably, the pre-read processing is preferentially performed for the mail closer to the cursor as the user moves the cursor in the in-box, and the pre-read processing is stopped for the mail further from the cursor. Thus, the pre-read processing can be performed preferentially for the mail that is likely to be viewed in the near future.

The decision method at step S309 is not limited in the present invention. For example, when it is preset that a prescribed range from mail data pointed to and selected by the cursor is subjected to the pre-read processing, decision may be made based on this setting, or prescribed range may be set by the user operation. In the setting by the user operation, it can be set that the pre-read processing is not carried out when it is desired to see only the text of a mail, thereby increasing the convenience.

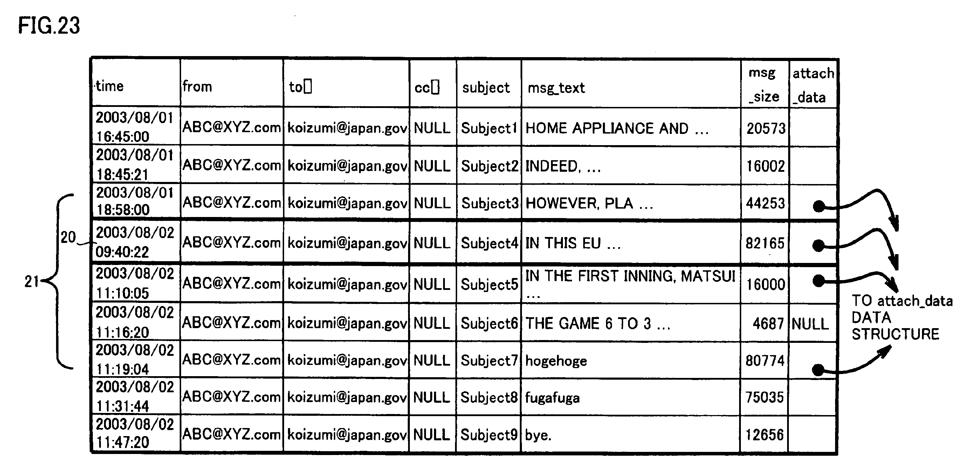

More specifically, if it is set that mail data in the range from the one previous to the selected mail data to the three subsequent to the selected mail data is subjected to the pre-read processing, with reference to the specific example of the data structure of the mail data shown in Fig. 23, when mail data 20 is pointed to and selected by the cursor, advance processing management unit 109 decides that the mail data group included in range 21 is subjected to the pre-read processing at step S309. In this way, the advance processing is executed by deciding on the mail data group to be subjected to the pre-read processing based on the selected mail data, so that it is more likely that the thumbnail of the file attached to the mail has been completed when the user views the mail.

As another specific example of the method of deciding on the mail data group subjected to the pre-read processing, a mail having the same attribute such as a sender or a subject with the presently selected mail may be decided on for the mail data group to be subjected to the pre-read processing. Alternatively, when a plurality of received mail retention regions are provided and the retention locations are sorted according to the attributes of mails such as senders or appropriate groups, the mail data group retained in the retention region according to a particular attribute may be decided on as a mail data group subjected to advance thumbnail creation process.

When the mail data group to be subjected to the pre-read processing is decided on at step S309, advance processing management unit 109 determines whether or not the pre-read processing has been executed for each mail data included in the mail data group (S311). Then, if the pre-read processing has been completed for all the mail data included in the above-noted mail data (NO at S311), the pre-read processing ends and the process returns to the main routine shown in Fig. 20.

On the other hand, if mail data for which pre-read processing has not been executed is included in the above-noted mail data group (YES at S311), advance processing management unit 109 decides on one mail data to be subjected to the pre-read processing from the mail data for which pre-read processing has not been executed (S313). Here, the mail data decision method is also preferably varied according to a change in the window display status, a change in remaining battery level or status of use of memory, or the user operation for changing the setting, as appropriate.

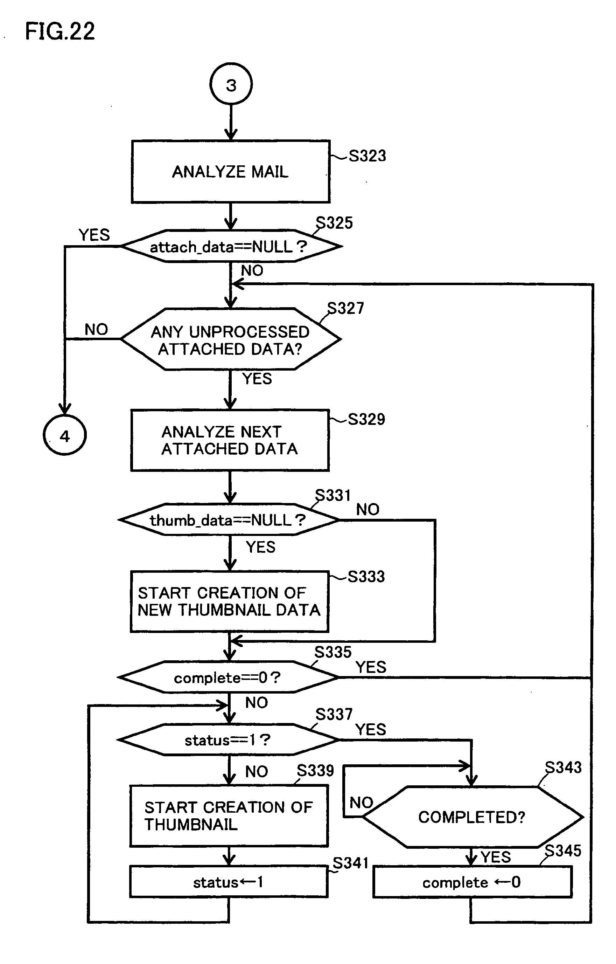

Then, referring to Fig. 22, when document selection unit 102 receives the decision at step S313 from advance processing unit 109, the mail data is analyzed in document analysis unit 104 (S323). The analysis here is similar to the processing at step S103 in the first embodiment, and the detailed description will not be repeated. As a result of the analysis at step S323, if information with field name "attach_data" of the mail data is empty (NULL), that is, if no attachment file is extracted from the mail data (YES at S325), the pre-reading processing for the mail data ends and the process returns to step 5301 in Fig. 21 so that the aforementioned processing is repeated again.

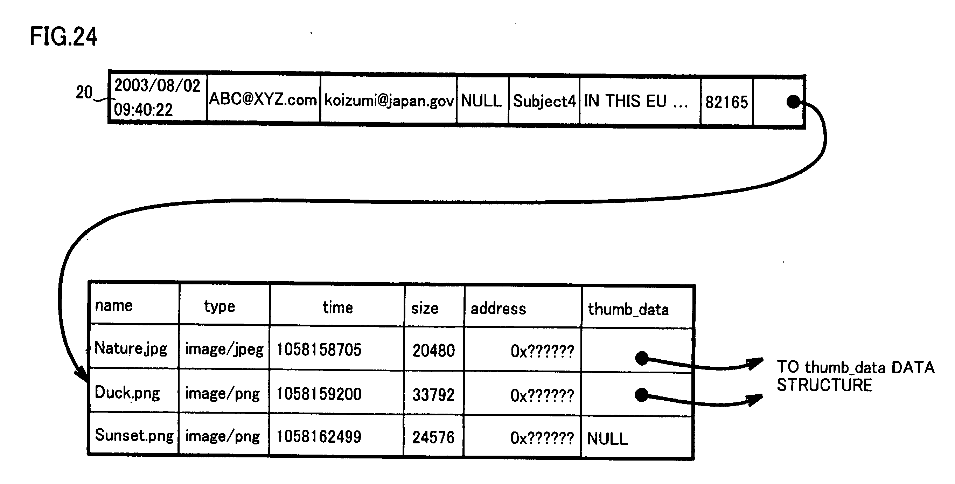

On the other hand, as a result of the analysis at step S323, if there exists information with field name "attach_data", that is, if an attachment file is extracted from the mail data (NO at S325), document analysis unit 104 reads a media file from the information with field name "attach_data" of the mail data and then expands the read media file into the data structure shown in Fig. 4 to determine whether or not there exists an attachment file that has not been subjected to the following processing (S327). For example, when the mail data decided to be subjected to the pre-read processing at step S313 is mail data 20 shown in Fig. 23, as shown in Fig. 24, media files "nature.jpg", "Duck.png", "Sunset.png" are read from the information with field name "attach_data" of mail data 20 and expanded into the data structure shown in Fig. 4, so that it is determined whether or not there exists any attachment file that has not been subjected to the following processing.

As a result, if all the attachment files have been processed (NO at S327), the pre-read processing for the mail data ends and the process returns to step S301 in Fig. 21 to repeat the aforementioned processing again.

On the other hand, as a result of the determination at step S327, if there exists an attachment file that has not been processed, document analysis unit 104 expands one attachment file thereamong into the data structure as shown in Fig. 4 to analyze the media data (S329). As a result, if information with field name "thumb_data" of the media file is empty (NULL), that is, if there exists no thumbnail data (YES at S331), thumbnail processing control unit 106 allows thumbnail creation unit 107 to create thumbnail data for the attachment file (S333). In Fig. 24, the information with field name "thumb_data" of media file "Sunset.png" is empty (NULL), so that thumbnail data for media file "Sunset.png" is created.

On the other hand, as a result of the analysis at step S329, if there exists information with field name "thumb_data" for the media file, that is, if there exists thumbnail data (NO at S331), skip the processing at step S333 and go on to the next process.

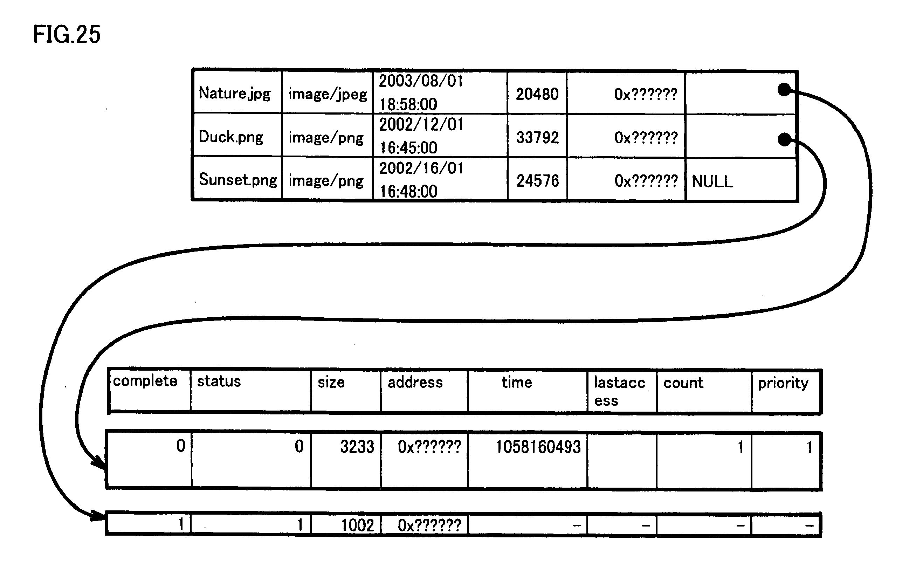

Document analysis unit 104 then reads thumbnail data from information with field name "thumb_data" of the media file and analyzes information with field name "complete". Fig. 25 shows a specific example of the data structure of the above media files "Nature.jpg", "Duck.png". As in media file "Nature.jpg" shown in Fig. 25, if information with field name "complete" is "0" as a result of the analysis, that is, if the created thumbnail has already existed (YES at S335), the processing for the attachment file ends, and the process returns to step S327 to repeat the aforementioned processing again.

On the other hand, as in media file "Duck.png" shown in Fig. 25, if information with field name "complete" is not "0" as a result of the analysis at step S335, that is, if there exists no created thumbnail (NO at S335), document analysis unit 104 further analyzes information with field name "status". As a result, if the information with field name "status" is "0", that is, if the thumbnail creation process has not started (NO at S337), thumbnail processing control unit 106 requests thumbnail creation unit 107 to create a thumbnail, so that the thumbnail creation process is started (S339). Thumbnail processing control unit 106 then updates the information with field name "status" to "1" (S341).

Then, if the thumbnail creation process has been completed (YES at S337 and YES at S343), thumbnail processing control unit 106 updates the information with field name "complete" to "0" (S345). The processing for the attachment file then ends and the process returns to step S327 to repeat the aforementioned processing again.

When the processing has been completed for all of the attachment files of the mail data by repeating the processing as described above (NO at S327), the process returns to step S301 in Fig. 21 to repeat the aforementioned processing again. More specifically, if the pre-read processing has been completed for one mail data decided at step S313 in the mail group to be subjected to the pre-read processing as decided at step S309, and the pre-read processing is yet to be performed for other mail data in the mail group to be subjected to the pre-read processing as decided at step S309 (NO at S301), each processing at steps S303 to S307 is repeated again. Then, if even one condition is satisfied, advance processing management unit 109 again decides on a mail group to be subjected to the pre-read processing at step S309 to repeat the following processing.

In the aforementioned processing, when there exist a plurality of mail data to be subjected to the pre-read processing, the thumbnail creation process has been completed for all the attachment files attached to one mail data before execution of the pre-read processing for the next mail data. Alternatively, advance processing management unit 109 may control the processing such that the thumbnail creation process is completed preferentially for at least one attachment file among the attachment files as attached for all of a plurality of mail data to be subjected to the pre-read processing. In this way, it is more likely that at least one thumbnail has been completed and displayable when a mail is opened, thereby improving the user's convenience.

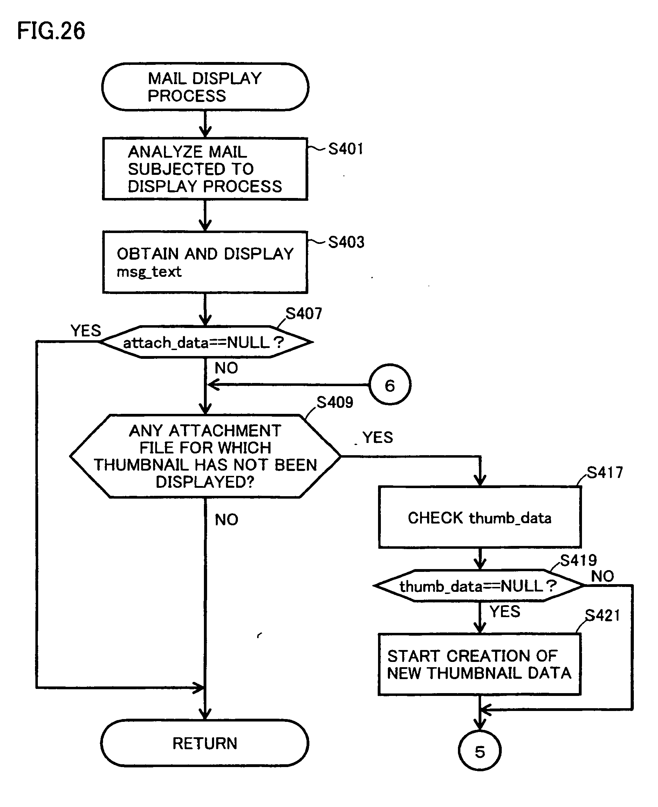

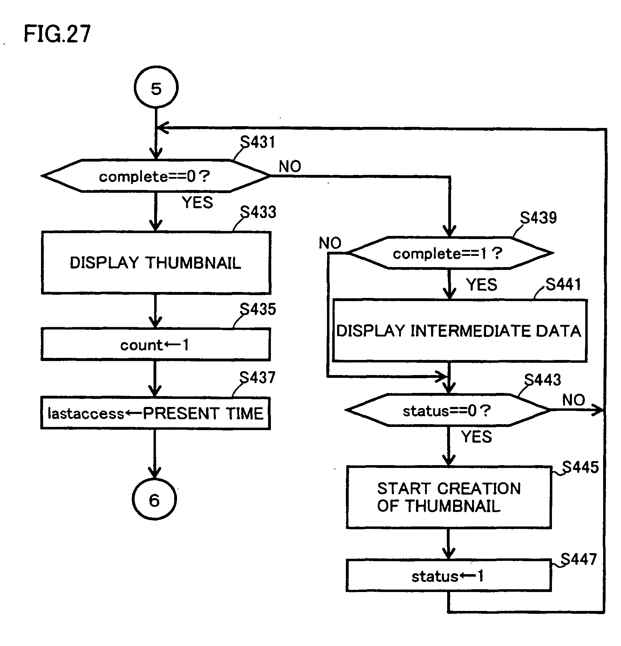

The mail display process executed at step S215 as described above will now be described with reference to the flowcharts in Figs. 26 and 27.

Referring to Fig. 26, first, mail data to be subjected to the display process is analyzed in document analysis unit 104 (S401). The processing here is similar to the processing at step S 103 in the first embodiment, and therefore the description will not be repeated. Document analysis unit 104 then obtains text from information with field name "msg_text" of the mail data based on the analysis result at step S401, and display management unit 105 allows the obtained text to be displayed in display unit 142 (S403).

Furthermore, document analysis unit 104 checks information with field name "attach_data" of the mail data, and if information with field name "attach_data" is empty (NULL), that is, if no attachment file is extracted from the mail data (YES at S407), the process of opening a mail ends with only text display at step S403.

On the other hand, as a result of the analysis, if there exists information with field name "attach_data", that is, if an attachment file is extracted from the mail data (NO at S407), it is checked whether or not there exists an attachment file for which thumbnail is not displayed (S409). If there exists an attachment file for which thumbnail is not displayed (YES at S409), document analysis unit 104 reads a media file from information with field name "attach_data" of the mail data to analyze the attachment file (S417). As a result, if information with field name "thumb_data" of the media file is empty (NULL), that is, if there exists no thumbnail data (YES at S 419), thumbnail data for the attachment file is created in thumbnail processing control unit 106 (S421). On the other hand, as a result of the analysis at step S417, if there exists information with field name "thumb_data" of the media file, that is, if there exists thumbnail data (NO at S419), skip the processing at step S421 and go on to the next process.

Now, referring to Fig. 27, document analysis unit 104 reads thumbnail data from information with field name "thumb_data" of the media file to analyze information with field name "complete". As a result, if the information with field name "complete" is "1", that is, if there exits displayable intermediate data (NO at S431 and YES at S439), display management unit 105 allows intermediate data to be displayed in display unit 142 (S441). The intermediate data here is data that is under course of thumbnail creation process as described in the first embodiment. The intermediate data is displayed in stages at step S441 as shown in Figs. 8 to 16. Alternatively, as described in the first embodiment, alternative data may be obtained in place of intermediate data and displayed as shown in Fig. 17 at step S441.

On the other hand, as a result of the analysis at step S431, if information with field name "complete" is "-1", that is, if neither displayable thumbnail data nor intermediate data exists (NO at S439), document analysis unit 104 further analyzes information with field name "status". As a result, if the information with field name "status" is "0", that is, if the thumbnail creation process has not started (YES at S443), thumbnail processing control unit 106 requests thumbnail creation unit 107 to create a thumbnail, so that the thumbnail creation process is started (S445). Then, thumbnail processing control unit 106 updates the information with field name "status" to "1" (S447).

On the other hand, as a result of the analysis at step S431, if the information with field name "complete" is "0", that is, if a created thumbnail has already existed (YES at S431), that thumbnail is obtained according to the information with field name "address" and displayed together with the text in display unit 142 by display management unit 105 (S433).

It is noted that in the present embodiment a created thumbnail has already existed, if a thumbnail is created as a result of the aforementioned processing, or if a thumbnail is created in the pre-read processing as described above and then retained in thumbnail temporary retention unit 108.

Then, thumbnail processing control unit 106 increments by 1 the access count that is information with field name "count" of the thumbnail data (S435) and updates information with field name "lastaccess" to the present time (S437).

Thumbnail processing control unit 106 allows the aforementioned processing shown in Fig. 27 to be executed for all the attachment files attached to the mail data to be subjected to the display processing. Then, when an attachment file for which thumbnail has not been displayed does no longer exist, and the thumbnails for all the attachment files attached to the mail data are displayed (YES at S409), the mail display process ends and the process returns to the main routine shown in Fig. 20.

In this way, in mobile phone 100 in accordance with the second embodiment, a thumbnail is created prior to the user operation and even if a thumbnail is not created in time for the user operation, the completed thumbnail can be displayed at the earlier stage by executing the aforementioned mail display process. Therefore, the user's stress can be alleviated.

It is noted that, in the first and second embodiments, description has mainly been made to the processing by mobile phone 100 as an information output device in accordance with the present invention to create a thumbnail of an attachment file as still image data attached to a mail. Preferably, the timing at which the created thumbnail is displayed is such that the user's cursor moving operation causes the mail to be pointed to and selected by the cursor and the user performs the operation of "opening" the mail. In addition, preferably, at the timing at which the user's cursor moving operation causes the thumbnail to be pointed to and selected by the cursor and the user performs the operation of "opening" the mail, a process of displaying the original still image in a larger size is executed in mobile phone 100. Here, this "opening" operation may be caused by a press on a key (a decision key or the like) for executing a decision operation or by the passage of a prescribed period of time in a state where the mail or the thumbnail is pointed to and selected by the cursor moving operation.

Furthermore, when mobile phone 100 in accordance with the present embodiment handles information including media data having its own time axis, such as animation, moving images, or a presentation document, as described above, display data at a plurality of given reproduction time points within a reproduction period of time may be extracted as still images, which are then reduced to be a plurality of thumbnails. The plurality of thumbnails may be arranged and displayed in the same window or may be switched automatically at prescribed time intervals and displayed in a thumbnail display region. Also in this case, similarly to a still image, display or reproduction is preferably caused by the operation of opening a thumbnail as described above. Here, mobile phone 100 may display or reproduce a thumbnail in the original size before reduction in pixel size or may display or reproduce the same in the thumbnail display region.

In the following, the thumbnail display will be described where a mail including media changing over time in mobile phone 100. Specifically, the thumbnail display of a presentation document changing over time will be described.

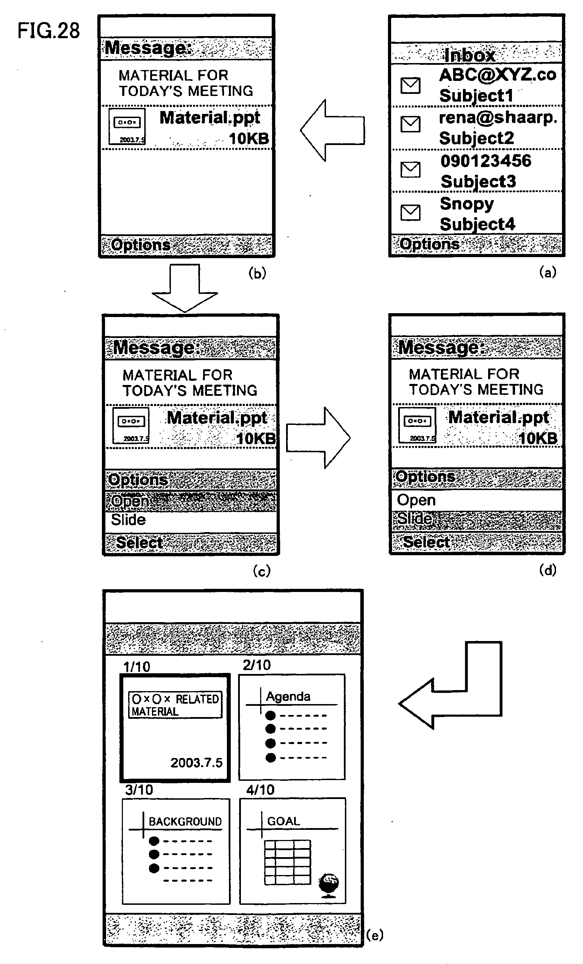

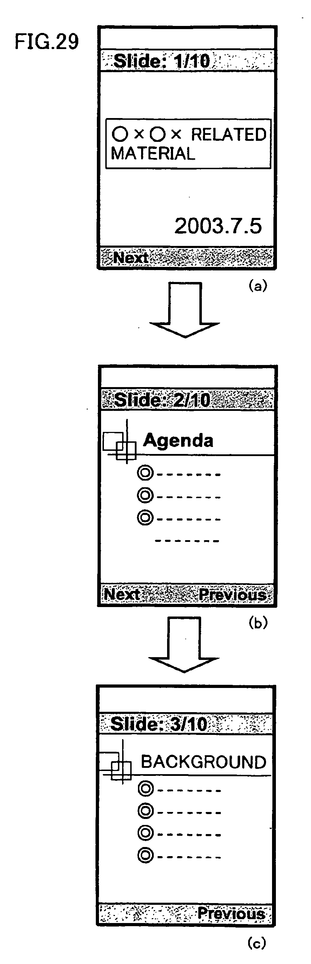

Figs. 28 and 29 are views showing a specific example of transition of windows displayed in display unit 142 when a presentation document is attached to a mail. The presentation document is a document formed of a plurality of slides switched and displayed by an operation by the user to switch the slides or at prescribed time intervals.

Fig. 28(a) is the same view as Fig. 8(a) showing a specific example of a mail list display window for displaying a list of mails in the in-box. In the mail list display window, the cursor is moved to select a display target mail (in Fig. 28(a), the mail with the subject name "Subject1") and the display target mail is opened, for example, by a press on a decision key. Fig. 28(b) is a view showing a specific example of a mail display window when the display target mail with the subject name "Subjectl" is opened.

As shown in Figs. 28(c) and 28(d), while the cursor is moved to the presentation document attached to the mail by pressing the up/down keys in the mail display window, operation reception unit 101 receives the user's key operation, for example, to select "Slide" of "Options", so that thumbnail processing control unit 106 creates a thumbnail for each slide by reducing the pixel size of the slide of the presentation document, and as shown in Fig. 28(e), display management unit 105 allows the thumbnails to be arranged and displayed in a window. Here, if there are a number of slides and all the thumbnails cannot be arranged and displayed in one window, they may be successively displayed by scrolling or any other technique.

In the thumbnail display window as shown in Fig. 28(e), upon reception of the operation of moving highlighted slides by up/down and right/left keys for displaying or reproducing the presentation document (for example, a press on a decision key), the slide pointed to by the cursor is first displayed or reproduced as shown in Figs. 29(a) to 29(c). Alternatively, mobile phone 100 may receive the user's key operation in the mail display window shown in Fig. 28(c) (here, the operation to select "Open") to directly display or reproduce the presentation document.

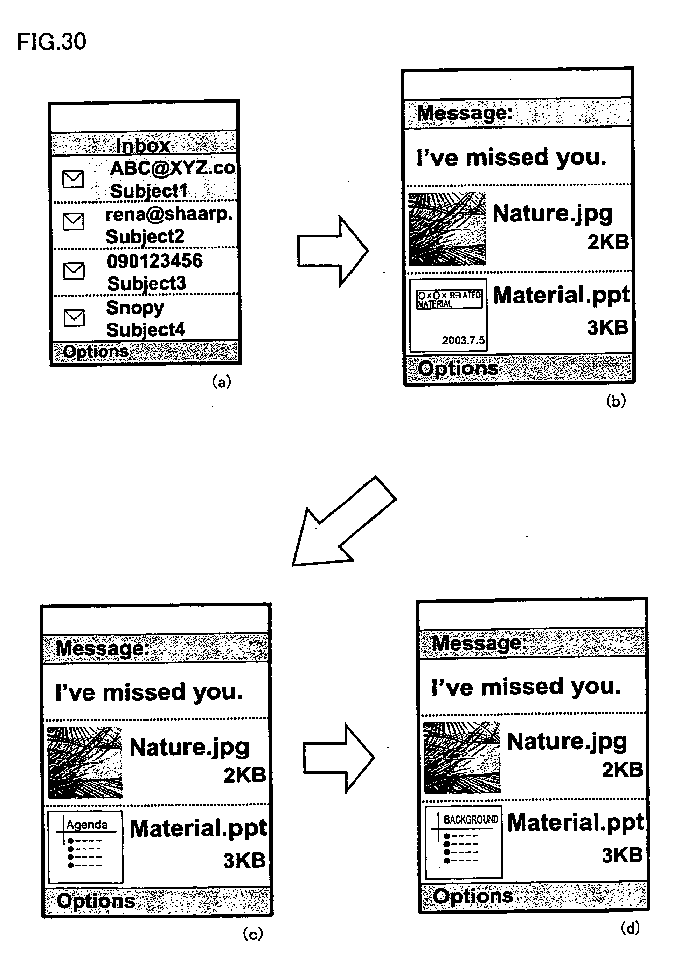

As another specific example of the thumbnail display for the presentation document, thumbnails of a prescribed number of slides are switched and displayed at prescribed time intervals in the thumbnail display region. Fig. 30 is a view showing a specific example of transition of windows displayed in display unit 142 in such a case. It is illustratively shown that when the target mail with the subject name "Subjectl" is selected (Fig. 30(a)), the thumbnails of slides are switched one-by-one at prescribed time intervals and displayed in the thumbnail display region for attachment file name "Material.ppt" (Figs. 30(b) to 30(d)).

Furthermore, the thumbnail display will be described where a mail including media changing over time is handled in mobile phone 100. Specifically, the thumbnail display of a mail formed of a plurality of slides switching over time as in MMS (Multimedia Messaging Service) will be described.

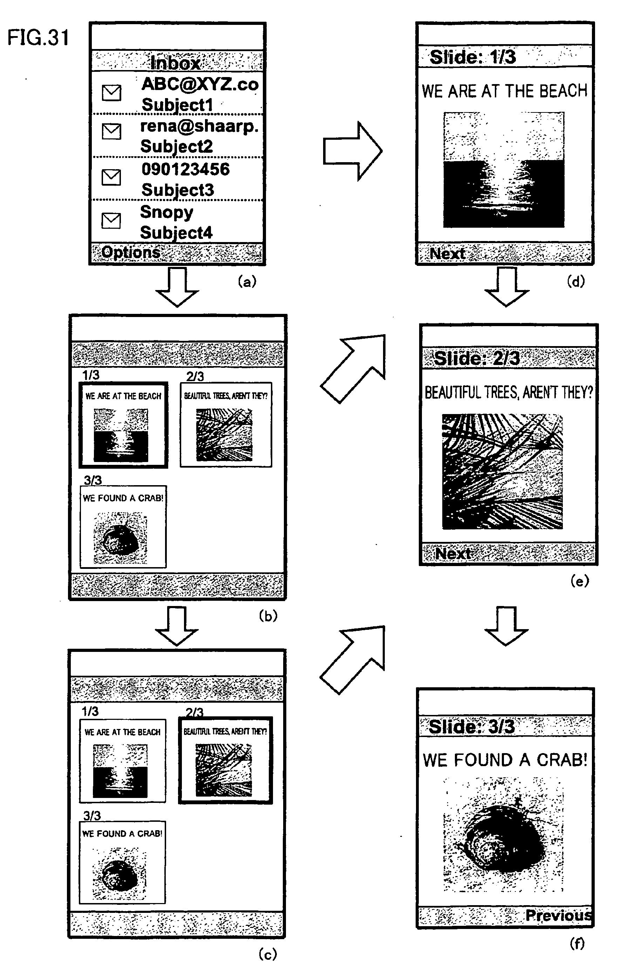

Fig. 31 is a view showing a specific example of transition of windows displayed in display unit 142 where the mail is formed of a plurality of slides switching over time. In this specific example, the display target mail is configured to include three slides. A plurality of media files including text, still images, moving images, and audio are attached to each of the slides for layout.

Fig. 31(a) is also the same view as Fig. 8(a), showing a specific example of a mail list display window for displaying a list of mails in the in-box. In the mail list display window, the cursor is moved to select a display target mail (in Fig. 31(a), the mail with the subject name "Subject1"), and the display target mail is opened, for example, by a press on a decision key. When the mail formed of a plurality of slides switching over time as in MMS is expanded in mobile phone 100, the first slide is first shown as shown in Fig. 31 (d), and then switched over to the second slide and third slide at prescribed time intervals (Figs. 31 (e), 31 (f)).

Furthermore, while the display target mail is selected in the mail list display window shown in Fig. 31 (a), operation reception unit 101 receives the user's key operation to select "Slide" from the "Options" menu. Accordingly, thumbnail processing control unit 106 creates the thumbnail for each slide by reducing the pixel size of the slide included in the mail, and as shown in Fig. 31(b), display management unit 105 allows the thumbnails to be arranged and displayed in a window. Therefore, the user can view the slides included in the mail at a glance without displaying the mail and waiting for all the slides being switched and displayed.

In the thumbnail display window as shown in Fig. 31(b), upon reception of the operation of displaying or reproducing a mail by moving the highlighted slides by the up/down and right/left keys (for example, a press on a decision key), the mail is displayed or reproduced, starting from the slide pointed to by the cursor. For example, in Fig. 31(b), the thumbnail showing the first slide out of three is selected. In this state, upon reception of the operation of displaying or reproducing the mail, the mail is displayed or reproduced, starting from the first slide out of three as shown in Fig. 31(d). Similarly, in Fig. 31(c), the thumbnail showing the second slide out of three is selected. In this state, upon reception of the operation of displaying or reproducing the mail, the mail is displayed or reproduced, starting from the second slide out of three as shown in Fig. 31 (e).

It is noted that the target to be subjected to the thumbnail display is not limited to a media file attached to a mail.

Furthermore, when a number of files are attached to one mail and all cannot be displayed in the thumbnail display region, similarly to the thumbnail display method for the presentation document as described above, a prescribed number of thumbnails may be switched at prescribed time intervals and displayed in the thumbnail display region.

As described above, when intermediate data in process of creation or alternative data is displayed during the course of creation of a thumbnail to be displayed, or when nothing is displayed during the course of creation of a thumbnail to be displayed, the "opening" operation as described above preferably allows the original data to be displayed or reproduced. Alternatively, when nothing is displayed during the course of creation of a thumbnail to be displayed, the thumbnail creation process in progress or before being started can preferably be cancelled. The cancel operation by the user may be caused by a press on a cancel button. Alternatively, cancellation may be assumed when the selected state is cleared by the cursor moving operation to remove the cursor.

Furthermore, in the present embodiment, the information output device in accordance with the present invention is realized by mobile phone 100 by way of illustration. Alternatively, as another specific example, the information output device in accordance with the present invention may be a television receiver (referred to as TV hereinafter), where the handled data is program information and the thumbnail is displayed as information presenting the outline of the program data itself or the media file assigned to the program information.

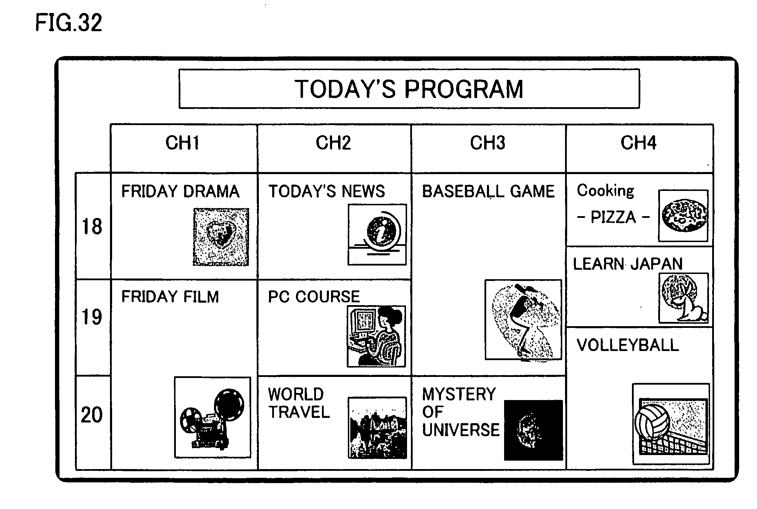

Referring to Fig. 32, a program listing displayed on TV as a specific example of an information output device in accordance with the present invention includes, in addition to a program name and program description, an image representing the contents or logotype of a program, moving images of the highlight of a program, and the like, in the form of a thumbnail, in a region for displaying each program. The thumbnail presenting the outline of the information related to a program is displayed in this way, so that the user can find the desired program more easily. Furthermore, the thumbnails may be switched at certain time intervals in each thumbnail display region. In addition, when thumbnails different for .each program are displayed (for a program such as "Friday Film", of which contents widely vary, the thumbnail different each time may be displayed), taking much time to prepare thumbnails, the processing similar to the mail opening process as described above may be performed on TV. Thus, intermediate data in process of creation may be displayed until the thumbnail is prepared. Alternatively, a thumbnail preset for each category by default may be displayed as alternative data.

Moreover, the thumbnail display method performed by the information output device in accordance with the present invention may be provided as a program. Such a program is stored in a computer readable recording medium and provided as a program product. In the present invention, such a recording medium is processed in a general computer. Therefore, a memory such as an ROM installed in or connected to a general computer may be a program medium. Alternatively, a flexible disc or CD-ROM (Compact Disk-Read Only Memory) readable when inserted in a program reading device provided as an external storage device may be a program medium.

In any case, the program stored in the program product may be accessed and executed by a microprocessor. In any case, a microprocessor may read and download the program into a program storage area such as an RAM included in a general computer thereby executing the program. A program for downloading is stored in a computer main unit beforehand.

Here, the above-noted program medium is a recording medium that can be separated from a computer main unit, and it may be a medium fixedly carrying a program, including tape systems such as magnetic tapes or cassette tapes, disk systems such as magnetic disks including flexible disks or hard disks or optical disks such as CD-ROM/MO (Magnet Optical disk)/MD (Mini Disk)/DVD (Digital Video Disk), card systems such as IC cards (including memory cards)/optical cards, or semiconductor memory such as mask ROM, EPROM (Erasable Programmable Read Only Memory) (R), EEPROM (Electronically Erasable and Programmable Read Only Memory) (R), and flash ROM.

Furthermore, since the information output device in accordance with the present invention has a system configuration connectable to a communication network including the Internet, a medium carrying a program in a volatile manner may be used so that the program is downloaded from a communication network. It is noted that when the program is downloaded from a communication network in this manner, a program for downloading may be stored in the main unit of the information output device beforehand or may be installed from a different recording medium.

It is note that the embodiments disclosed herein should be taken in all aspects as illustrative and not restrictive. The scope of the present invention is indicated by the claims rather than by the foregoing description, and all equivalencies of the claims and all changes within the claims are intended to be embraced herein.

### Industrial Applicability

The present invention is advantageously available in an information output device, an information output method, and an information output program product for outputting information presenting the outlines of a plurality of data to allow for alleviation of the slowness in switching to a thumbnail list display window or the user's stress caused by the slowness, where an externally received document data such as an email or a document prepared by the user includes one or more media data and a thumbnail image for each media data is displayed on a device.

## Claims

1. An information output device comprising:
a first information selection unit (102) selecting information having been received and stored in the information output device;
an outline presenting information creation unit (107) creating outline presenting information corresponding to each of a plurality of multimedia data in parallel, said multimedia data being included in the information selected by said first information selection unit (102); and
a presentation unit (105) presenting said created outline presenting information, wherein
said outline presenting information includes thumbnail images of the multimedia data: and
said presentation unlit (105) presents alternative information to replace said outline presenting information or said outline presenting information under course of creation in said outline presenting information creation unit (107) in stages according to respective said outline presenting information creation process before completion of said outline presenting information creation process.

2. The information output device according to claim 1, further comprising;
an outline presenting information creation control unit (106) controlling execution of said outline presenting information creation process in said outline presenting information creation unit (107); and
a storage unit (108) storing outline presenting information, wherein
when said outline presenting information is stored in said storage unit (108),
said outline presenting information creation control unit (106) performs control such that said outline presenting information creation process is not executed in said outline presenting information creation unit (107), and
said presentation unit (105) presents said outline presenting information stored in said storage unit (108).

3. The information output device according to claim 2, further comprising a second information selection unit (102, 109) selecting information to be subjected to said outline presenting information creation process based on said information selected by said first information selection unit (102), wherein
said outline presenting information creation unit (107) creates outline presenting information for multimedia data included in the information selected by said second information selection unit (102, 109) and stores the same in said storage unit (108).

4. The information output device according to claim 3, wherein said second information selection unit (102, 109) selects information to be subjected to said outline presenting information creation process based on a status of the information output device.

5. The information output device according to claim 3, wherein said second information selection unit (102, 109) selects information to be subjected to said outline presenting information creation process based on an attribute of said information selected by said first information selection unit (102).

6. The information output device according to claim 3, wherein when information including a plurality of multimedia data is included in multiple pieces of information selected by said second information selection unit (102, 109), said outline presenting information creation control unit (106) controls execution of said outline presenting information creation process in said outline presenting information creation unit (107) such that, for all information selected by said second information selection unit (102, 109), outline presenting information for at least one multimedia data included in said information is created.

7. The information output device according to claim 3, wherein when information including a plurality of multimedia data is included in multiple pieces of information selected by said second information selection unit (102, 109), said outline presenting information creation control unit (106) controls execution of said outline presenting information creation process in said outline presenting information creation unit (107) such that, for one piece of information selected by said second information selection unit (102, 109), outline presenting information for multimedia data included in information subsequent to said one piece of information is created after outline presenting information for all multimedia data included in said one piece of information has been created.

8. The information output device according to claim 2, further comprising:
a deleted outline presenting information selection unit (106) selecting outline presenting information to be subjected to deletion from said storage unit (108); and
a deletion unit (106) deleting said selected outline presenting information.

9. The information output device according to claim 8, wherein said deleted outline presenting information selection unit (106) selects said outline presenting information to be subjected to deletion based on an attribute of multimedia data.

10. The information output device according to claim 8, wherein said deleted outline presenting information selection unit (106) selects said outline presenting information to be subjected to deletion based on a data size of said outline presenting information.

11. The information output device according to claim 8, wherein said deleted outline presenting information selection unit (106) selects said outline presenting information to be subjected to deletion based on costs of said outline presenting information creation process in said outline presenting information creation unit (107).

12. The information output device according to claim 8, wherein said deleted outline presenting information selection unit (106) selects said outline presenting information to be subjected to deletion based on a presentation status of said outline presenting information in said presentation unit (105).

13. The information output device according to claim 8, wherein when said deleted outline presenting information selection unit (106) selects a plurality of said outline presenting information to be subjected to deletion, said deletion unit (106) deletes prescribed outline presenting information among said outline presenting information to be subjected to deletion such that outline presenting information of at least one multimedia data included in one piece of information is left.

14. The information output device according to claim 1, further comprising an outline presenting information presentation control unit (105) controlling a timing of presentation of said outline presenting information in said presentation unit (105).

15. The information output device according to claim 14, wherein said outline presenting information presentation control unit (105) controls said timing of presentation of said outline presenting information in said presentation unit (105) such that said outline presenting information is presented after expiration of a prescribed time interval after said information is selected by said first information selection unit (102).

16. The information output device according to claim 1. wherein
said multimedia data is data including an image, and
said outline presenting information creation unit (107) creates said outline presenting information using at least a part of said image.

17. An information output method comprising:
a first information selection step (S101, S201, S213) of selecting information, having been previously received and stored;
an outline presenting information creation step (S111, S127, S333, S339) of creating outline presenting information corresponding to each of a plurality of multimedia data in parallel, said multimedia data being included in the information selected at said first information selection step (S101, S201, S213); and
a presentation step (S117, S137, S215) of presenting said created outline presenting information, wherein
said outline presenting information includes thumbnail images of the multimedia data; and
at said presentation step (S137, S215), alternative information to replace said outline presenting information or said outline presenting information under course of creation processing at said outline presenting information creation step (S111, S127, S333, S339) is presented in stages according to respective said outline presenting information creation process before completion of said outline presenting information creation process.

18. The information output method according to claim 17, further comprising:
an outline presenting information creation control step (S109, S113, S125, S331, S335, S337) of controlling execution of said outline presenting information creation process at said outline presenting informations creation step (S111, S127, S333, S339); and
a storage step (S 133, S345) of storing outline presenting information in a storage device, wherein
when said outline presenting information is stored in said storage device,
at said outline presenting information creation control step (S109, S113, S331, S335), control is performed such that said outline presenting information creation process is not executed at said outline presenting information creation step (S111, S127, S333, S339), and
at said presentation step (S117, S215), said outline presenting information stored in said storage device is presented.

19. The information output method according to claim 18, further comprising a second information selection step (S301-S313) of selecting information to be subjected to said outline presenting information creation process based on said information selected at said first information selection step (S201), wherein
at said outline presenting information creation step (S333, S339), outline presenting information of multimedia data included in the information selected at said second information selection step (S3301-S313) is created and stored in said storage device.

20. The information output method according to claim 19, wherein at said second information selection step (S301-S313), said information to be subjected to said outline presenting information creation process is selected based on a status of an information output device.

21. The information output method according to claim 19, wherein at said second information selection step (S301-S313), said information to be subjected to said outline presenting information creation process is selected based on an attribute of said information selected at said first information selection step (S201).

22. The information output method according to claim 19, wherein when information including a plurality of multimedia data is included in multiple pieces of information selected at said second information selection step (S301-S313), at said outline presenting information creation control step (S331, S335), execution of said outline presenting information creation process at said outline presenting information creation step (S333, S339) is controlled such that, for all the information selected at said second information selection step (S301-S313), outline presenting information of at least one multimedia data included in said information is created.

23. The information output method according to claim 19, wherein when information including a plurality of multimedia data is included in multiple pieces of information selected at said second information selection step (S301-S313), at said outline presenting information creation control step (S331, S335), execution of said outline presenting information creation process at said outline presenting information creation step (S333, S339) is controlled such that, for one piece of information selected at said second information selection step (S301-S3133), outline presenting information for multimedia data included in subsequent information is created after outline presenting information for all multimedia data included in said one piece of information has been created.

24. The information output method according to claim 18, further comprising:
a deleted outline presenting information selection step (S501-S511) of selecting outline presenting information to be subjected to deletion from said storage step (S133, S345); and
a deletion step (S513) of deleting said selected outline presenting information.

25. The information output method according to claim 24, wherein at said deleted outline presenting information selection step (S501-S511), said outline presenting information to be subjected to deletion is selected based on an attribute of multimedia data.

26. The information output method according to claim 24, wherein at said deleted outline presenting information selection step (S501-S511), said outline presenting information to be subjected to deletion is selected based on a data size of said outline presenting information.

27. The information output method according to claim 24, wherein at said deleted outline presenting information selection step (S501-S511), said outline presenting information to be subjected to deletion is selected based on costs of said outline presenting information creation process at said outline presenting information creation step (S111, S127, S333, S339).

28. The information output method according to claim 24, wherein at said deleted outline presenting information selection step (S501-S511), said outline presenting information to be subjected to deletion is selected based on a presentation status of said outline presenting information at said presentation step (S117, S215).

29. The information output method according to claim 24, wherein when a plurality of said outline presenting information to be subjected to deletion are selected at said deleted outline presenting information selection step (S501-S51), at said deletion step (S513), prescribed outline presenting information among said outline presenting information to be subjected to deletion is deleted such that outline presenting information of at least one multimedia data included in one piece of information is left.

30. The information output method according to claim 17, further comprising an outline presenting information presentation control step (S117, S215) of controlling a timing of presentation of said outline presenting information at said presentation step (S117, S215).

31. The information output method according to claim 30, wherein at said outline presenting information presentation control step (S117, S215), said timing of presentation of said outline presenting information at said presentation step (S117, S215) is controlled such that said outline presenting information is presented after expiration of a prescribed time interval after said information is selected at said first information selection step (S101, S201, S213).

32. The information output method according to claim 17, wherein
said multimedia data is data including an image, and
at said outline presenting information creation step (S111, S127, S333, S339), said outline presenting information is created using at least a part of said image.

33. An information output program product causing a computer to execute a process of outputting information including multimedia data, causing execution of:
a first information selection step (S101, S201, S213) of selecting information having been previously received and stored;
an outline presenting information creation step (S111, S127, S333, S339) of creating outline presenting information corresponding to each of a plurality of multimedia data in parallel, said multimedia data being included in the information selected at said first information selection step (S101, S201, S213); and
a presentation step (S117, S 13 7, S215) of presenting said created outline presenting information, wherein
said outline presenting information includes thumbnail images of the multimedia data; and
at said presentation step (S137, S215), alternative information to replace said outline presenting information or said outline presenting information under course of creation processing at said outline presenting information creation step (S111, S127, S333, S339) is presented in stages according to respective said outline presenting information creation process before completion of said outline presenting information creation process.

34. The information output program product according to claim 33, further causing execution of
an outline presenting information creation control step (S109, S113, S125, S331, S335, S337) of controlling execution of said outline presenting information creation process at said outline presenting information creation step (S111, S127, S333, S339); and
a storage step (S 133, S345) of storing outline presenting information in a storage device, wherein
when said outline presenting information is stored in said storage device,
at said outline presenting information creation control step (S 1 09, S113, S331, S335), control is performed such that said outline presenting information creation process is not executed at said outline presenting information creation step (S111, S127, S333, S339), and
at said presentation step (S117, S215), said outline presenting information stored in said storage device is presented.

35. The information output program product according to claim 34, further causing execution of a second information selection step (S301-S313) of selecting information to be subjected to said outline presenting information creation process based on said information selected at said first information selection step (S201), wherein
at said outline presenting information creation step (S333, S339), outline presenting information of multimedia data included in the information selected at said second information selection step (S301-S313) is created and stored in said storage device.

## Patentansprüche

1. Informationsausgabevorrichtung, die enthält:
eine erste Informationsauswahleinheit (102), die Informationen auswählt, die in der Informationsausgabevorrichtung empfangen und gespeichert wurden;
eine Übersichtsdarstellungsinformationserzeugungseinheit (107), die Übersichtsdarstellungsinformationen, die jedem von mehreren Multimediadaten entsprechen, parallel erzeugt, wobei die Multimediadaten in den durch die erste Informationsauswahleinheit (102) ausgewählten Informationen enthalten sind; und
eine Darstellungseinheit (105), die die erzeugten Übersichtsdarstellungsinformationen darstellt, wobei
die Übersichtsdarstellungsinformationen Miniaturbilder der Multimediadaten enthalten; und
die Darstellungseinheit (105) alternative Informationen in dern Übersichtsdarstellungsinformationserzeugungsvorgang entsprechenden Stufen vor der Beendigung des Übersichtsdarstellungsinformationserzeugungsvorgangs darstellt, um die Übersichtsdarstellungsinformationen oder die Übersichtsdarstellungsinformationen im Verlauf der Erzeugung in der Übersichtsdarstellungsinformationserzeugungseinheit (107) zu ersetzen.

2. Informationsausgabevorrichtung nach Anspruch 1, die ferner enthält:
eine Übersichtsdarstellungsinformationserzeugungssteuereinheit (106), die die Ausführung des Obersichtsdarstellungsinformationserzeugungsvorgangs in der Übersichtsdarstellungsinformationserzeugungseinheit (107) steuert; und
eine Speichereinheit (108), die die Obersichtsdarstellungsinformationen speichert, wobei
dann, wenn die Übersichtsdarstellungsinformationen in der Speichereinheit gespeichert sind (108)
die Übersichtsdarstellungsinformationserzeugungssteuereinheit (106) die Steuerung derart ausführt, dass der Übersichtsdarstellungsinformationserzeugungsvorgang nicht in der Übersichtsdarstellungsinformationserzeugungseinheit (107) ausgeführt wird, und
die Darstellungseinheit (105) die in der Speichereinheit (108) gespeicherten Übersichtsdarstellungsinformationen darstellt.

3. Informationsausgabevorrichtung nach Anspruch 2, die ferner eine zweite Informationsauswahleinheit (102, 109) enthält, die dem Übersiehtsdarstellungsinformationserzeugungsvorgang zu unterziehende Informationen anhand der durch die erste Informationsauswahleinheit (102) ausgewählten Informationen auswählt, wobei
die Übersichtsdarstellungsinformationserzeugungseinheit (107) Übersichtsdarstellungsinformationen für in den durch die zweite Informationsauswahleinheit (102, 109) ausgewählten Informationen enthaltene Multimediadaten erzeugt und diese in der Speichereinheit (108) speichert.

4. Informationsausgabevorrichtung nach Anspruch 3, wobei die zweite Informationsauswahleinheit (102, 109) dem Übersichtsdarstellungsinformationserzeugungsvorgang zu unterziehende Informationen anhand eines Zustands der Informationsausgabevorrichtung auswählt.

5. Informationsausgabevorrichtung nach Anspruch 3, wobei die zweite Informationsauswahleinheit (102, 109) dem Übersichtsdarstellungsinformationserzeugungsvorgang zu unterziehende Informationen anhand einer Eigenschaft der durch die erste Informationsauswahleinheit (102) ausgewählten Informationen auswählt.

6. Informationsausgabevorrichtung nach Anspruch 3, wobei dann, wenn Informationen, die mehrere Multimediadaten enthalten, in mehreren Teilen der durch die zweite Informationsauswahlvorrichtung (102, 109) ausgewählten Informationen enthalten sind, die Übersichtsdarstellungsinformationserzeugungssteuereinheit (106) die Ausführung des Übersichtsdarstellungsinformationserzeugungsvorgangs (106) in der Übersichtsdarstellungsinformationserzeugungseinheit (107) derart steuert, dass für alle durch die zweite Informationsauswahleinheit (102, 109) ausgewählten Informationen ÜbersichtsdarstellungsInformationen für mindestens einen in den Informationen enthaltenen Multimediadatensatz erzeugt werden.

7. Informationsausgabevorrichtung nach Anspruch 3, wobei dann, wenn Informationen, die mehrere Multimediadaten enthalten, in mehreren Teilen der durch die zweite Informationsauswahleinheit (102, 109) ausgewählten Informationen enthalten sind, die Übersichtsdarstellungsinformationserzeugungssteuereinheit (106) die Ausführung des Übersichtsdarstellungsinfomationserzeugungsvorgangs in der Übersichtsdarstellungsinformationserzeugungseinheit (107) derart steuert, dass für einen durch die zweite Informationsauswahleinheit (102, 109) ausgewählten Teil der Informationen Übersichtsdarstellungsinformationen für in den auf den einen Teil der Informationen nachfolgenden Informationen enthaltene Multimediadaten erzeugt werden, nachdem Übersichtsdarstellungsinformationen für alle in dem einen Teil der Informationen enthaltenen Multimediadaten erzeugt worden sind.

8. Informationsausgabevorrichtung nach Anspruch 2, die ferner enthält:
eine Löschungsübersichtsdarstellungsinformationsauswahleinheit (106), die dem Löschen zu unterziehende Übersichtsdarstellungsinformationen aus der Speichereinheit (108) auswählt,; und
eine Löschcinheit (106), die die ausgewählten Übersiehtsdarstellungsinformationen löscht.

9. Informationsausgabevorrichtung nach Anspruch 8, wobei die Löschungsübersichtsdarstellungsinformationsauswahleinheit (106) dem Löschen zu unterziehende Übersiclxtsdarstellungsinformationen anhand einer Eigenschaft der Multimediadaten auswählt.

10. Informationsausgabevorrichtung nach Anspruch 8, wobei die Löschungübersichtsdarstellungsinformationsauswahleinheit (106) dem Löschen zu unterziehende Übersichtsdarstellungsinformationen anhand einer Datengröße der Übersichtsdarstellungsinformationen auswählt.

11. Informationsausgabevorrichtung nach Anspruch 8, wobei die Löschungsübersichtsdarstellungsinformationsauswahleinheit (106) dem Löschen zu unterziehende Übersichtsdarstellungsinformationen anhand der Kosten des Übersichtsdarstellungsinformationserzeugungsvorgangs in der Übersichtsdarstellungsinformationserzeugungseinheit (107) auswählt.

12. Informationsausgabevorrichtung nach Anspruch 8, wobei die Löschungsübersichtsdarstellungsinformationsauswähleinheit (106) die dem Löschen zu unterziehenden Übersichtsdarstellungsinformationen anhand eines Darstellungszustands der Übersichtsdarstellungsinformationen in der Darstellungseinheit (105) auswählt.

13. Informationsausgabevorrichtung nach Anspruch 8, wobei dann, wenn die Löschungsübersichtsdarstellungsinformationsauswahleinheit (106) mehrere dem Löschen zu unterziehende Übersichtsdarstellungsinformationen auswählt, die Löscheinheit (106) vorgeschriebene Übersichtsdarstellungsinformationen unter den dem Löschen zu unterziehenden Übersichtsdarstellungsinformationen auswählt, so dass die Übersichtsdarstellungsinformationen von mindestens einem in einem Teil der Informationen enthaltenen Multimediadatensatz zurückbleiben.

14. Informationsausgabevorrichtung nach Anspruch 1, die ferner eine Übersichtsdarstellungsinformationsdarstellungssteuereinheit (105) enthält, die eine Zeitvorgabe der Darstellung der Übersichtsdarstellungsinformationen in der Darstellungseinheit (105) steuert.

15. Informationsausgabevorrichtung nach Anspruch 14, wobei die Übersichtsdarstellungsinformationsdarstellungssteuereinheit (105) die Zeitvorgabe der Darstellung der Übersichtsdarstellungsinformationen in der Darstellungseinheit (105) derart steuert, dass die Übersichtsdarstellungsinformationen nach Ablauf eines vorgeschriebenen Zeitintervalls, nachdem die Informationen durch die erste Informationsauswahleinheit (102) ausgewählt wurden, dargestellt werden.

16. Informationsausgabevorrichtung nach Anspruch 1, wobei
die Multimediadaten Daten sind, die ein Bild enthalten, und
die Übersichtsdarstellungsinformationscrzeugungseinheit (107) die Übersichtsdarstellungsinformationen unter Verwendung von mindestens einem Teil des Bildes erzeugt.

17. Informationsausgabeverfahren, das enthält:
einen ersten Informationsauswahlschritt (S101, S201, S213) des Auswählens von vorher empfangenen und gespeicherten Informationen;
einen Übersichtsdarstellungsinformationserzeugungsschritt (S111, S127, S333, S339) des parallelen Erzeugens von Übersichtsdarstellungsinformationen, die jedem von mehreren einzelnen Multimediadaten entsprechen, wobei die Multimediadaten in den in dem ersten Informationsauswahlschritt (S101, S201, S213) ausgewählten Informationen enthalten sind; und
einen Darstellungsschritt (S117, S137, S215) des Darstellens der erzeugten Übersichtsdarstellungsinformationen, wobei
die Übersichtsdarstellungsinformationen Miniaturbilder der Multimediadaten enthalten; und
in dem Darstellungsschritt (S137, S215) alternative Informationen in dem Übersichtsdarstellungsinformationserzeugungsvorgang entsprechenden Stufen vor Beendigung des Übersichtsdarstellungsinformationserzeugungsvorgangs dargestellt werden, um die Übersichtsdarstellungsinformationen oder die Übersichtsdarstellungsinformationen im Verlauf des Erzeugungsvorgangs in dem Übersichtsdarstellungsinformationserzeugungsschritt (S111, S127, S333, S339) zu ersetzen.

18. Informationsausgabeverfahren nach Anspruch 17, das ferner enthält:
einen Übersichtsdarstellungsinformationserzeugungssteuerschritt (S109, S113, S125, S331, S335, S337) des Steuerns der Ausführung des Übersichtsdarstellungsinformationserzeugungsvorgangs in dem Übersichtsdarstcllungsinformationserzeugungsschritt (S111, S127, S333, S339); und
einen Speicherschritt (S133, S345) des Speicherns der Übersichtsdarstellungsinformationen in einer Speichervorrichtung, wobei
dann, wenn die Übersichtsdarstellungsinformationen in der Speichervorrichtung gespeichert werden,
die Steuerung in dem Ühersichtsdarstellungsinformationserzeugungssteuerschritt (S109, S113, S331, S335) derart ausgeführt wird, dass der Übersichtsdarstellungsinformationserzeugungsvorgang nicht in dem Übersichtsdarstellungsinformationserzeugungsschritt (S111, S127, S333, S339) ausgeführt wird, und
die in der Speichervorrichtung gespeicherten Obersichtsdarstellungsinformationen in dem Darstellungsschritt (S117, S215) dargestellt werden.

19. Informationsausgabeverfahren nach Anspruch 18, das ferner einen zweiten Informationsauswahlschritt (S301-S313) des Auswählens der dem Übersichtsdarstellungsinformationserzeugungsvorgang zu unterziehenden Informationen anhand der in dem ersten Informationsauswahlschritt (S201) ausgewählten Informationen enthält, wobei
Darstellungsinformationen der in den in dem zweiten Informationsauswahlschritt (S301-S313) ausgewählten Informationen enthaltenen Multimediadaten in dem Übersichtadarstellungsinformationserzeugungsschritt (S333, S339) erzeugt werden und in der Sprichervorrichtung gespeichert werden.

20. Informationsausgabeverfahren nach Anspruch 19, wobei die dem Übersichtsdarstellungsinformationscrzeugungsvorgang zu unterziehenden Informationen in dem zweiten Informationsauswahlschritt (S301-S313) anhand eines Zustands einer Informationsausgabevorrichtung ausgewählt werden.

21. Informationsausgabeverfahren nach Anspruch 19, wobei die dem Übersichtsdarstellungsinformationserzeugungsvorgang zu unterziehenden Informationen in dem zweiten Informationsauswahlschritt (S301-S313) anhand einer Eigenschaft der in dem ersten Informationsauswahlschritt (S201) ausgewählten Informationen ausgewählt werden.

22. Informationsausgabeverfahren nach Anspruch 19, wobei dann, wenn Informationen, die mehrere Multimediadaten enthalten, in mehreren Teilen der in dem zweiten Informationsauswahlschritt (S301-S313) ausgewählten Informationen enthalten sind, in dem Übersichtsdarstellungsinformationserzeugungssteuerschritt (S331, S335) die Ausführung des Übersichtsdarstellungsinformationserzeugungsvorgangs in dem Übersichtsdarstellungsinformationserzeugungsschritt (S333, S339) derart gesteuert wird, dass für alle in dem zweiten Informationsauswahlschritt (S301-S313) ausgewählten Informationen Übersichtsdarstellungsinformationen aus mindestens einem in den Informationen enthaltenen Multimediadatensatz erzeugt werden.

23. Informationsausgabeverfahren nach Anspruch 19, wobei dann, wenn Informationen, die mehrere Multimediadaten enthalten, in mehreren Teilen der in dem zweiten Informationsauswahlschritt (S301-S313) ausgewählten Informationen enthalten sind, in dem Übersichtsdarstellungsinformationserzeugungssteuerschritt (S331, S335) die Ausführung des Übersichtsdarstellungsinformationserzeugungsvorgangs (S333, S339) derart gesteuert wird, dass für einen Teil der in dem zweiten Informationsauswahlschritt (S301-S313) ausgewählten Informationen Übersichtsdarstellungsinformationen für in nachfolgenden Informationen enthaltene Multimediadaten erzeugt werden, nachdem Übersichtsdarstellungsinformationen für alle in dem einen Teil der Informationen enthaltenen Multimediadaten erzeugt worden sind.

24. Informationsausgabeverfahren nach Anspruch 18, das ferner enthält:
einen Löschungsübersichtsdarstellungsinformationsauswahlschritt (S501_S511) des Auswählens von dem Löschen zu unterziehenden Übersichtsdarstellungsinformationen von dem Speicherschritt (S133, S345); und
einen Löschschritt (S513) des Löschens der Übersichtsdarstellungsinformationen.

25. Informationsausgabeverfahren nach Anspruch 24, wobei in dem Löschungsubersichtsdarstellungsinformationsauswahlschritt (S501-S511) die dem Löschen zu unterzichenden Übersichtsdarstellungsinformationen anhand einer Eigenschaft der Multimediadaten ausgewählt werden.

26. Informationsausgabeverfahren nach Anspruch 24, wobei die dem Löschen zu unterziehenden Übersichtsdarstellungsinformationen in dem Löschungsübersichtsdarstellungsinformationsauswahlschritt (S501-S511) anhand einer Datengröße der Übecsichtsdarstellungsinformationen ausgewählt werden.

27. Informationsausgabeverfahren nach Anspruch 24, wobei die dem Löschen zu unterziehenden Übersichtsdarstellungsinformationen in dem Löschungsübersichtsdarstellungsinformationsauswahlschritt (S501-S511) anhand von Kosten des Übersichtsdarstellungsinformationserzeugungsvorgangs in dem Übersichtsdarstellungsinformationserzeugungsschritt (S111, S127, S333, S339) ausgewählt werden.

28. Informationsausgabeverfahren nach Anspruch 24, wobei die dem Löschen zu unterziehenden Übersichtsdarstellungsinformationen in dem Löschungsübersichtsdarstellungsinformationsauswahlschritt (S501-S511) anhand eines Darstellungszustands der Übersichtsdarstellungsinformationen in dem Darstellungsschritt (S117, S215) ausgewählt werden.

29. Informationsausgabeverfahren nach Anspruch 24, wobei dann, wenn mehrere dem Löschen zu unterziehende Übersichtsdarstellungsinformationen in dem Löschungsübersichtsdarstellungsinformationsauswahlschritt (S501-S511) ausgewählt werden, in dem Löschschritt (S513) vorgeschriebene Übersichtsdarstellungsinformationen unter den dem Löschen zu unterziehenden Übersichtsdarstellungsinformationen gelöscht werden, so dass Übersichtsdarstellungsinformationen von mindestens einem in einem Teil der Informationen enthaltenen Multimediadatensatz zurückbleiben.

30. Informationsausgabeverfahren nach Anspruch 17, das fernen einen Übersichtsdarstellungsinformationsdarstellungssteuerschritt (S117, S215) des Steuerns einer Zeitvorgabe der Darstellung der Übersichtsdarstellungsinformationen in dem Darstellungsschritt (S117, S215) enthält.

31. Informationsausgabeverfahren nach Anspruch 30, wobei in dem Übersichtsdarstellungsinformationsdarstellungssteuerschritt (S117, S215) die Zeitvorgabe der Darstellung der Übersichtsdarstellungsinformationen in dem Darstellungsschritt (S117, S215) derart gesteuert wird, dass die Übersichtsdarstellungsinformationen nach dem Ablauf eines vorgeschriebenen Zeitintervalls, nachdem die Informationen in dem ersten Informationsauswahlschritt (S101, S201, S213) ausgewählt wurden, dargestellt werden.

32. Informationsausgabeverfahren nach Anspruch 17,
wobei die Multimediadaten Daten sind, die ein Bild enthalten, und
Übersichtsdarstellungsinformationen unter Verwendung von mindestens einem Teil des Bildes in dem Übersichtsdarstellungsinformationserzeugungsschritt (S111, S127, S333, S339) erzeugt werden.

33. Informationsausgabeprogrammprodukt, das bewirkt, dass ein Computer einen Vorgang des Ausgebens von Informationen, die Multimediadaten enthalten, ausführt, wobei die Ausführung bewirkt wird von:
einem ersten Informationsauswahlschritt (S101, S201, S213) des Auswählens von vorher empfangenen und gespeicherten Daten;
einem Übersichtsdarstellungsinformationserzeugungsschritt (S111, S127, S333, S339) des parallelen Erzeugens von Übersichtsdarstellungsinformationen, die jedem von mehreren Multimediadaten entsprechen, wobei die Multimediadaten in den in dem ersten Informationsauswahlschritt (S101, S201, S213) ausgewählten Informationen enthalten sind; und
einem Darstellungsschritt (S117, S137, S215) des Darstellens der erzeugten Übersichtsdarstellungsinformationen, wobei
die Übersichtsdarstellungsinformationen Miniaturbilder der Multimediadaten enthalten; und
in dem Darstellungsschritt (S137, S215) alternative Informationen in dem jeweiligen Übersichtsdarstellungsinformationserzeugungsvorgang entsprechenden Stufen vor Beendigung des Übersichtsdarstellungsinformationserzeugungsvorgangs dargestellt werden, um die Übersichtsdarstellungsinformationen oder die Übersichtsdarstellungsinformationen im Verlauf des Erzeugungsvorgangs in dem Übersichtsdarstellungsinformationserzeugungsschritt (S111, S127, S333, S339) zu ersetzen.

34. Informationsausgabeprogrammprodukt nach Anspruch 33, das ferner die Ausführung bewirkt von:
einem Übersichtsdarstellungsinformationserzeugungssteuerschritt (S109, S113, S125, S331, S335, S337) des Steuerns der Ausführung des Übersichtsdarstellungsinformationserzeugungsvorgangs in dem Übersichtsdarstellungsinformationserzeugungsschritt (S111, S127, S333, S339) und
einem Speicherschritt (S133, S345) des Speicherns von Übersichtsdarstellungsinformationen in einer Speichervorrichtung, wobei
dann, wenn die Übersichtsdarstellungsinformationen in der Speichervorrichtung gespeichert werden,
die Steuerung in dem Übersichtsdarstellungsinformationserzeugungssteuerschritt (S109, S113, S331, S335) derart ausgeführt wird, dass der Übersichtsdarstellungsinformationserzeugungsvorgang nicht in dem Übersichtsdarstellungsinformationserzeugungsschritt (S111, S127, S333, S339) ausgeführt wird, und
die in der Speichervorrchtung gespeicherten Übersichtsdarstellungsinformationen in dem Darstellungsschritt (S117, S215) dargestellt werden.

35. Informationsausgabeprogrammprodukt nach Anspruch 34, das ferner die Ausführung eines zweiten Informationsauswahlschritts (S301-S313) des Auswählens von dem übersichtsdarstellungsinformationserzeugungsvorgang zu unterziehenden Informationen anhand von in dem ersten Informationsauswahlschritt (S201) ausgewählten Informationen bewirkt, wobei
in dem Übersichtsdarstellungsinformationserzeugungsschritt (S333, S339), Übersichtsdarstellungsinformationen von in dem zweiten Informatiansauswahlschritt ausgewählten Informationen enthaltenen Multimediadaten erzeugt werden und in der Speichervorrichtung gespeichert werden.

## Revendications

1. Dispositif de sortie d'informations comportant :
une première unité de sélection d'informations (102) sélectionnant des informations qui ont été reçues et stockées dans le dispositif de sortie d'informations ;
une unité de création d'informations de présentation d'aperçu (107) créant des informations de présentation d'aperçu correspondant à chacune de plusieurs données multimédia en parallèle, lesdites données multimédia étant comprises dans les informations sélectionnées par ladite première unité de sélection d'information (102) ; et
une unité de présentation (105) présentant lesdites informations de présentation d'aperçu créées, dans lequel
lesdites informations de présentation d'aperçu comprennent des images miniatures des données multimédia ; et
ladite unité de présentation (105) présente des informations alternatives pour remplacer lesdites informations de présentation d'aperçu ou lesdites informations de présentation d'aperçu en cours de création dans ladite unité de création d'informations de présentation d'aperçu (107) lors d'étapes conformes audit processus respectif de création d'informations de présentation d'aperçu avant réalisation dudit processus de création d'informations de présentation d'aperçu.

2. Dispositif de sortie d'informations selon la revendication 1, comportant en outre :
une unité de commande de création d'informations de présentation d'aperçu (106) commandant l'exécution dudit processus de création d'informations de présentation d'aperçu dans ladite unité de création d'informations de présentation d'aperçu (107) ; et
une unité de stockage (108) stockant des informations de présentation d'aperçu, dans lequel
lorsque lesdites informations de présentation d'aperçu sont stockées dans ladite unité de stockage (108),
ladite unité de commande de création d'informations de présentation d'aperçu (106) procède à une commande de telle sorte que ledit processus de création d'informations de présentation d'aperçu ne soit pas exécuté dans ladite unité de création d'informations de présentation d'aperçu (107), et
ladite unité de présentation (105) présente lesdites informations de présentation d'aperçu stockées dans ladite unité de stockage (108).

3. Dispositif de sortie d'informations selon la revendication 2, comportant en outre une deuxième unité de sélection d'informations (102, 109) sélectionnant des informations qui doivent être soumises audit processus de création d'informations de présentation d'aperçu, en se basant sur lesdites informations sélectionnées par ladite première unité de sélection d'informations (102), dans lequel
ladite unité de création d'informations de présentation d'aperçu (107) crée des informations de présentation d'aperçu pour des données multimédia comprises dans les informations sélectionnées par ladite deuxième unité de sélection d'informations (102, 109) et stocke lesdites informations dans ladite unité de stockage (108).

4. Dispositif de sortie d'informations selon la revendication 3, dans lequel ladite deuxième unité de sélection d'informations (102, 109) sélectionne des informations à soumettre audit processus de création d'informations de présentation d'aperçu en se basant sur un état du dispositif de sortie d'information.

5. Dispositif de sortie d'informations selon la revendication 3, dans lequel ladite deuxième unité de sélection d'informations (102, 109) sélectionne des informations à soumettre audit processus de création d'informations de présentation d'aperçu en se basant sur un attribut desdites informations sélectionnées par ladite première unité de sélection d'informations (102).

6. Dispositif de sortie d'informations selon la revendication 3, dans lequel, lorsque des informations comprenant plusieurs données multimédia sont comprises dans une multiplicité d'éléments d'informations sélectionnés par ladite deuxième unité de sélection d'informations (102, 109), ladite unité de commande de création d'informations de présentation d'aperçu (106) commande l'exécution dudit processus de création d'informations de présentation d'aperçu dans ladite unité de création d'informations de présentation d'aperçu (107), de telle sorte que, pour toutes les informations sélectionnées par ladite deuxième unité de sélection d'informations (102, 109), des informations de présentation d'aperçu sont créées pour au moins une donnée multimédia comprise dans lesdites informations.

7. Dispositif de sortie d'informations selon la revendication 3, dans lequel, lorsque des informations comportant plusieurs données multimédia sont comprises sous la forme d'une multiplicité d'éléments d'informations sélectionnés par ladite deuxième unité de sélection d'informations (102, 109), ladite unité de commande de création d'informations de présentation d'aperçu (106) commande l'exécution dudit processus de création d'informations de présentation d'aperçu dans ladite unité de création d'informations de présentation d'aperçu (107) de telle sorte que, pour un élément d'information sélectionné par ladite deuxième unité de sélection d'informations (102, 109), des informations de présentation d'aperçu pour les données multimédia comprises dans des informations subséquentes audit élément d'information sont créées après création des informations de présentation d'aperçu pour toutes les données multimédia comprises dans ledit élément d'information.

8. Dispositif de sortie d'informations selon la revendication 2, comportant en outre :
une unité de sélection d'informations de présentation d'aperçu supprimées (106) sélectionnant des informations de présentation d'aperçu devant être soumises à une suppression dans ladite unité de stockage (108) ; et
une unité de suppression (106) supprimant lesdites informations de présentation d'aperçu sélectionnées.

9. Dispositif de sortie d'informations selon la revendication 8, dans lequel ladite unité de sélection d'informations de présentation d'aperçu supprimées (106) sélectionne lesdites informations de présentation d'aperçu devant être soumises à une suppression en se basant sur un attribut de données multimédia.

10. Dispositif de sortie d'informations selon la revendication 8, dans lequel ladite unité de sélection d'informations de présentation d'aperçu supprimées (106) sélectionne lesdites informations de présentation d'aperçu devant être soumises à une suppression en se basant sur une taille de données desdites informations de présentation d'aperçu.

11. Dispositif de sortie d'informations selon la revendication 8, dans lequel ladite unité de sélection d'informations de présentation d'aperçu supprimées (106) sélectionne lesdites informations de présentation d'aperçu devant être soumises à une suppression en se basant sur des coûts dudit processus de création d'informations de présentation d'aperçu dans ladite unité de création d'informations de présentation d'aperçu (107).

12. Dispositif de sortie d'informations selon la revendication 8, dans lequel ladite unité de sélection d'informations de présentation d'aperçu supprimées (106) sélectionne lesdites informations de présentation d'aperçu devant être soumises à une suppression en se basant sur un état de présentation desdites informations de présentation d'aperçu dans ladite unité de présentation (105).

13. Dispositif de sortie d'informations selon la revendication 8, dans lequel ladite unité de sélection d'informations de présentation d'aperçu supprimées (106) sélectionne plusieurs desdites informations de présentation d'aperçu devant être soumises à une suppression, ladite unité de suppression (106) supprime des informations de présentation d'aperçu prescrites parmi lesdites informations de présentation d'aperçu devant être soumises à une suppression, de manière à conserver les informations de présentation d'aperçu d'au moins une donnée multimédia comprise dans un élément d'information.

14. Dispositif de sortie d'informations selon la revendication 1, comprenant en outre une unité de commande de présentation d'informations de présentation d'aperçu (105) commandant un minutage de présentation desdites informations de présentation d'aperçu dans ladite unité de présentation (105).

15. Dispositif de sortie d'informations selon la revendication 14, dans lequel ladite unité de sélection d'informations de présentation d'aperçu (105) commande ledit minutage de présentation desdites informations de présentation d'aperçu dans ladite unité de présentation (105), de telle sorte que lesdites informations de présentation d'aperçu soient présentées après l'expiration d'un intervalle de temps prescrit après que lesdites informations aient été sélectionnées par ladite première unité de sélection d'informations (102).

16. Dispositif de sortie d'informations selon la revendication 1, dans lequel
lesdites données multimédia sont des données contenant une image, et
ladite unité de création d'informations de présentation d'aperçu (107) crée lesdites informations de présentation d'aperçu en utilisant au moins une partie de ladite image.

17. Procédé de sortie d'informations comportant :
une première étape de sélection d'informations (S101, S201, S213) consistant à sélectionner des informations qui ont été précédemment reçues et stockées ;
une étape de création d'informations de présentation d'aperçu (S111, S127, S333, S339) consistant à créer des informations de présentation d'aperçu correspondant à chacune de plusieurs données multimédia en parallèle, lesdites données multimédia étant comprises dans les informations sélectionnées lors de ladite première étape de sélection d'information (S101, S201, S213) ; et
une étape de présentation (S117, S137, S215) consistant à présenter lesdites informations de présentation d'aperçu créées, dans lequel
lesdites informations de présentation d'aperçu comprennent des images miniatures des données multimédia ; et
lors de ladite étape de présentation (S137, S215), des informations alternatives destinées à remplacer lesdites informations de présentation d'aperçu ou lesdites informations de présentation d'aperçu en cours de création lors de ladite étape de création d'informations de présentation d'aperçu (S111, S127, S333, S339) sont présentées lors d'étapes conformes audit processus respectif de création d'informations de présentation d'aperçu avant réalisation dudit processus de création d'information de présentation d'aperçu.

18. Procédé de sortie d'informations selon la revendication 17, comportant en outre :
une étape de commande de création d'informations de présentation d'aperçu (S109, S113, S125, S331, S335, S337) consistant à commander l'exécution dudit processus de création d'informations de présentation d'aperçu lors de ladite étape de création d'informations de présentation d'aperçu (S111, S127, S333, S339) ; et
une étape de stockage (S133, S345) consistant à stocker des informations de présentation d'aperçu dans un dispositif de stockage, dans lequel
lorsque lesdites informations de présentation d'aperçu sont stockées dans ledit dispositif de stockage,
lors de ladite étape de commande de création d'informations de présentation d'aperçu (S109, S113, S331, S335), la commande est effectuée de telle sorte que ledit processus de création d'informations de présentation d'aperçu ne soit pas exécuté lors de ladite étape de création d'informations de présentation d'aperçu (S111, S127, S33, S339), et
lors de ladite étape de présentation (S117, S215), sont présentées lesdites informations de présentation d'aperçu stockées dans ledit dispositif de stockage.

19. Procédé de sortie d'informations selon la revendication 18, comportant en outre une deuxième étape de sélection d'informations (S301-S313) consistant à sélectionner des informations devant être soumises audit processus de création d'informations de présentation d'aperçu en se basant sur lesdites informations sélectionnées lors de ladite première étape de sélection d'informations (S201), dans lequel
lors de ladite étape de création d'informations de présentation d'aperçu (S333, S339), les informations de présentation d'aperçu des données multimédia comprises dans les informations sélectionnées lors de ladite deuxième étape de sélection d'informations (S301-S313) sont créées et stockées dans ledit dispositif de stockage.

20. Procédé de sortie d'informations selon la revendication 19, dans lequel, lors de ladite deuxième étape de sélection d'informations (S301-S313), lesdites informations à soumettre audit processus de création d'informations de présentation d'aperçu sont sélectionnées en se basant sur un état d'un dispositif de sortie d'information.

21. Procédé de sortie d'informations selon la revendication 19, dans lequel, lors de ladite deuxième étape de sélection d'informations (S301-S313), lesdites informations à soumettre audit processus de création d'informations de présentation d'aperçu sont sélectionnées en se basant sur un attribut desdites informations sélectionnées lors de ladite première étape de sélection d'informations (S201).

22. Procédé de sortie d'informations selon la revendication 19, dans lequel, lorsque des informations comprenant plusieurs données multimédia sont comprises dans une multiplicité d'éléments d'informations sélectionnés lors de ladite deuxième étape de sélection d'informations (S301-S313), lors de ladite étape de commande de création d'informations de présentation d'aperçu (S331, S335), l'exécution dudit processus de création d'informations de présentation d'aperçu lors de ladite étape de création d'informations de présentation d'aperçu (S333, S339) est commandée de telle sorte que, pour toutes les informations sélectionnées lors de ladite deuxième étape de sélection d'informations (S301-S313), des informations de présentation d'aperçu sont créées pour au moins une donnée multimédia comprise dans lesdites informations.

23. Procédé de sortie d'informations selon la revendication 19, dans lequel, lorsque des informations comprenant plusieurs données multimédia sont comprises sous la forme d'une multiplicité d'éléments d'informations sélectionnés lors de ladite deuxième étape de sélection d'informations (S310-S313), lors de ladite étape de commande de création d'informations de présentation d'aperçu (S331, S335), l'exécution dudit processus de création d'informations de présentation d'aperçu dans ladite unité de création d'informations de présentation d'aperçu (S333, S339) est commandée de telle sorte que, pour un élément d'informations sélectionné lors de ladite deuxième étape de sélection d'informations (S301, S313), des informations de présentation d'aperçu pour les données multimédia comprises dans des informations subséquentes audit élément d'information sont créées après création des informations de présentation d'aperçu pour toutes les données multimédia comprises dans ledit élément d'information.

24. Procédé de sortie d'informations selon la revendication 18, comportant en outre :
une étape de sélection d'informations de présentation d'aperçu supprimées (S501-S511) consistant à sélectionner des informations de présentation d'aperçu devant être soumises à une suppression lors de ladite étape de stockage (S133, S345) ; et
une étape de suppression (S513) consistant à supprimer lesdites informations de présentation d'aperçu sélectionnées.

25. Procédé de sortie d'informations selon la revendication 24, dans lequel, lors de ladite étape de sélection d'informations de présentation d'aperçu supprimées (S501-S511), lesdites informations de présentation d'aperçu devant être soumises à une suppression sont sélectionnées en se basant sur un attribut de données multimédia.

26. Procédé de sortie d'informations selon la revendication 24, dans lequel, lors de ladite étape de sélection d'informations de présentation d'aperçu supprimées (S501-S511), lesdites informations de présentation d'aperçu devant être soumises à une suppression sont sélectionnées en se basant sur une taille de données desdites informations de présentation d'aperçu.

27. Procédé de sortie d'informations selon la revendication 24, dans lequel, lors de ladite étape de sélection d'informations de présentation d'aperçu supprimées (S501-S511), lesdites informations de présentation d'aperçu devant être soumises à une suppression sont sélectionnées en se basant sur des coûts dudit processus de création d'informations de présentation d'aperçu lors de ladite étape de création d'informations de présentation d'aperçu (S111, S127, S333, S339).

28. Procédé de sortie d'informations selon la revendication 24, dans lequel, lors de ladite étape de sélection d'informations de présentation d'aperçu supprimées (S501-S511), lesdites informations de présentation d'aperçu devant être soumises à une suppression sont sélectionnées en se basant sur un état de présentation desdites informations de présentation d'aperçu lors de ladite étape de présentation (S117, S215).

29. Procédé de sortie d'informations selon la revendication 24, dans lequel, lorsque plusieurs desdites informations de présentation d'aperçu devant être soumises à une suppression sont sélectionnées lors de ladite étape de sélection d'informations de présentation d'aperçu supprimées (S501-S511), lors de ladite étape de suppression (S513), des informations de présentation d'aperçu prescrites parmi lesdites informations de présentation d'aperçu devant être soumises à une suppression sont supprimées de manière à conserver des informations de présentation d'aperçu d'au moins une donnée multimédia comprise dans un élément d'information.

30. Procédé de sortie d'informations selon la revendication 17, comprenant en outre une étape de commande de présentation d'informations de présentation d'aperçu (S117, S215) consistant à commander un minutage de présentation desdites informations de présentation d'aperçu lors de ladite étape de présentation (S117, S215).

31. Procédé de sortie d'informations selon la revendication 30, dans lequel, lors de ladite étape de commande de présentation d'informations de présentation d'aperçu (S117, S215), ledit minutage de présentation desdites informations de présentation d'aperçu lors de ladite étape de présentation (S117, S215) est commandé de telle sorte que lesdites informations de présentation d'aperçu soient présentées après l'expiration d'un intervalle de temps prescrit après que lesdites informations aient été sélectionnées lors de ladite première étape de sélection d'informations (S101, S201, S213).

32. Procédé de sortie d'informations selon la revendication 17, dans lequel
lesdites données multimédia sont des données contenant une image, et
lors de ladite étape de création d'informations de présentation d'aperçu (S111, S127, S333, S339), lesdites informations de présentation d'aperçu son créées en utilisant au moins une partie de ladite image.

33. Produit de programme de sortie d'informations provoquant l'exécution par un ordinateur d'un processus de sortie d'informations contenant des données multimédia, et provoquant l'exécution des étapes ainsi constituées :
une première étape de sélection d'informations (S101, S201, S213) consistant à sélectionner des informations qui ont été précédemment reçues et stockées ;
une étape de création d'informations de présentation d'aperçu (S111, S127, S333, S339) consistant à créer des informations de présentation d'aperçu correspondant à chacune de plusieurs données multimédia en parallèle, lesdites données multimédia étant comprises dans les informations sélectionnées lors de ladite première étape de sélection d'information (S101, S201, S213) ; et
une étape de présentation (S117, S137, S215) consistant à présenter lesdites informations de présentation d'aperçu créées, dans lequel
lesdites informations de présentation d'aperçu comprennent des images miniatures des données multimédia ; et
lors de ladite étape de présentation (S137, S215), des informations alternatives destinées à remplacer lesdites informations de présentation d'aperçu ou lesdites informations de présentation d'aperçu en cours de création lors de ladite étape de création d'informations de présentation d'aperçu (S111, S127, S333, S339) sont présentées lors d'étapes conformes audit processus respectif de création d'informations de présentation d'aperçu avant réalisation dudit processus de création d'informations de présentation d'aperçu.

34. Produit de programme de sortie d'informations selon la revendication 33, comportant en outre l'exécution des étapes ainsi constituées :
une étape de commande de création d'informations de présentation d'aperçu (S109 , S113, S125, S331, S335, S337) consistant à commander l'exécution dudit processus de création d'informations de présentation d'aperçu lors de ladite étape de création d'informations de présentation d'aperçu (S111, S127, S333, S339) ; et
une étape de stockage (S133, S345) consistant à stocker des informations de présentation d'aperçu dans un dispositif de stockage, dans lequel
lorsque lesdites informations de présentation d'aperçu sont stockées dans ledit dispositif de stockage,
lors de ladite étape de commande de création d'informations de présentation d'aperçu (S109, S113, S331, S335), la commande est effectuée de telle sorte que ledit processus de création d'informations de présentation d'aperçu ne soit pas exécuté lors de ladite étape de création d'informations de présentation d'aperçu (S111, S127, S333, S339), et
lors de ladite étape de présentation (S117, S215), sont présentées lesdites informations de présentation d'aperçu stockées dans ledit dispositif de stockage.

35. Produit de programme de sortie d'informations selon la revendication 34, provoquant en outre l'exécution d'une deuxième étape de sélection d'informations (S301-S313) consistant à sélectionner des informations devant être soumises audit processus de création d'informations de présentation d'aperçu en se basant sur lesdites informations sélectionnées lors de ladite premiére étape de sélection d'informations (S201), dans lequel
lors de ladite étape de création d'informations de présentation d'aperçu (S333, S339), les informations de présentation d'aperçu des données multimédia comprises dans les informations sélectionnées lors de ladite deuxième étape de sélection d'informations (S301-S313) sont créées et stockées dans ledit dispositif de stockage.
